(19) Europäisches Patentamt
European Patent Office
Office européen des brevets

(11) **EP 2 634 296 B1**

(12) **EUROPEAN PATENT SPECIFICATION**

(45) Date of publication and mention
of the grant of the patent:
**02.12.2015 Bulletin 2015/49**

(51) Int Cl.:
**D01F 6/04** *(2006.01)*     **D01F 6/30** *(2006.01)*
**D01F 6/46** *(2006.01)*     **E01C 13/08** *(2006.01)*

(21) Application number: **10805612.8**

(86) International application number:
**PCT/ES2010/070705**

(22) Date of filing: **29.10.2010**

(87) International publication number:
**WO 2012/056053 (03.05.2012 Gazette 2012/18)**

(54) **POLYETHYLENE-BASED ORIENTED TAPES AND METHOD FOR THE PREPARATION THEREOF**

Gereckte Bänder auf der Grundlage von Polyethylen und Verfahren zu deren Herstellung

BANDES ORIENTÉS, À BASE DE POLYÉTHYLÈNE ET PROCÉDÉ DE PRÉPARATION ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.09.2013 Bulletin 2013/36**

(73) Proprietor: **Dow Global Technologies LLC Midland, MI 48674 (US)**

(72) Inventors:
• **SANDKUEHLER, Peter**
 **E-43003 Tarragona (ES)**

• **CLAASEN, Gert**
 **8805 Richterswil (CH)**

(74) Representative: **Boult Wade Tennant Verulam Gardens 70 Gray's Inn Road London WC1X 8BT (GB)**

(56) References cited:
**EP-A1- 1 469 104     WO-A1-2006/066777
WO-A1-2010/006097     JP-A- 11 269 811**

EP 2 634 296 B1

## Description

## Technical Field

The present disclosure relates to tapes and monofilaments of a polyethylene composition, a process for making the same, and processes for fabricating artificial turf thereform.

## Background

The use of polymeric compositions, such as polyolefins, in producing tapes or monofilaments is generally known. Exemplary polyolefins include, but are not limited to, polypropylene compositions, which can be used in the manufacture of a variety of materials. Such materials include tapes or monofilaments, which are used for a variety of applications. Common applications for polypropylene tapes and/or monofilaments include carpet backing; industrial-type bags, sacks, or wraps; ropes or cordage; artificial turf and geotextiles. They can be particularly useful in woven materials or fabrics that require a high degree of durability and toughness.

Despite the research efforts in developing compositions suitable for tapes or monofilaments, there is still a need for a polyethylene composition that displays both improved tenacity and residual elongation. An improvement in both of these characteristics (e.g., tenacity and residual elongation) is a highly desirable achievement.

Various examples of polyethylene compositions exist. These can include those illustrated in the following publications: WO 2010/006097, JP 11269811, WO 2006/066777 and EP 1469104.

## Summary

In the first aspect of the present invention, there is provided a tape as defined in claim 1. In the second aspect of the present invention, there is provided a process as defined in claim 10.

The present disclosure provides for polyethylene based oriented tapes and monofilaments, and methods of making the same. The tapes and monofilaments of the present disclosure include a polyethylene composition comprising (a) less than or equal to 100 percent by weight of the polyethylene composition derived from ethylene monomers, and (b) less than 20 percent by weight of the polyethylene composition derived from one or more $\alpha$-olefin monomers. The polyethylene composition of the tape or monofilament has a density in the range of 0.920 to 0.970 g/cm$^3$, a molecular weight distribution ($M_w/M_n$) in the range of 1.70 to 3.50, a melt index ($I_2$) in the range of 0.2 to 50 g/10 minutes, a molecular weight distribution ($M_z/M_w$) in the range of less than 2.5, vinyl unsaturation of less than 0.1 vinyls per one thousand carbon atoms present in the backbone of the polyethylene composition, and tapes and/or monofilaments made from this polyethylene composition have a decitex of greater than 500 g/10,000 m.

In one or more embodiments, the tape or monofilament according to the disclosure can have a tenacity in the range of 1 to 7 cN/decitex and residual elongation greater than 10 percent (%). In one or more embodiments, the tape or monofilament according to the disclosure can have a hot oil (90 °C) shrink measured in percent after being annealed at 120 °C in the range of less than 30. In one or more embodiments, the polyethylene composition of the tape or monofilament according to the disclosure can have a density in the range of 0.925 to 0.960 g/cm$^3$, and a melt index ($I_2$) in the range of 0.8 to 10 g/10 minutes. In one or more embodiments, the polyethylene composition of the tape or monofilament according to the disclosure can have a vinyl unsaturation of less than 0.05 vinyls per one thousand carbon atoms present in the backbone of the polyethylene composition. In one or more embodiments, the polyethylene composition of the tape or monofilament according to the disclosure can have less than 2 peaks on an elution temperature-eluted amount curve determined by continuous temperature rising elution fraction method at equal or above 30 °C, wherein the purge peak which is below 30 °C is excluded. In one or more embodiments, the polyethylene composition of the tape or monofilament according to the disclosure can have less than 15 percent by weight of the polyethylene composition derived from one or more $\alpha$-olefin monomers. In one or more embodiments, the polyethylene composition of the tape or monofilament according to the disclosure can be free of long chain branching. In one or more embodiments, the polyethylene composition of the tape or monofilament according to the disclosure can have less than 100 parts by weight of hafnium residues remaining from a hafnium based metallocene catalyst per one million parts of polyethylene composition. In one or more embodiments, the polyethylene composition of the tape or monofilament according to the disclosure can have less than 5 percent (%) by weight of the polyethylene composition of a UV stabilizer.

Embodiments of the present disclosure also include a process for making a tape or monofilament comprising the steps of: (1) selecting a polyethylene composition comprising; less than or equal to 100 percent by weight of the polyethylene composition derived from ethylene monomers; less than 20 percent by weight of the polyethylene composition derived from one or more $\alpha$-olefin monomers; wherein the polyethylene composition of the tape or monofilament has a density in the range of 0.920 to 0.970 g/cm$^3$, a molecular weight distribution ($M_w/M_n$) in the range of 1.70 to 3.5, a melt index ($I_2$) in the range of 0.2 to 50 g/10 minutes, a molecular weight distribution ($M_z/M_w$) in the range of less than 2.5, vinyl unsaturation of less than 0.1 vinyls per one thousand carbon atoms present in the backbone of the polyethylene composition; and (2) forming the polyethylene composition into the tape or monofilament having a decitex of greater than 500 g/10,000 m.

In one or more embodiments, the process for making the tape or monofilament according to the present disclosure includes the steps of extruding the polyethylene composition from an extruder, and quenching the polyethylene composition emerging from the extruder in a liquid having a temperature of 20 to 30 °C. In one or more embodiments, the process for making the tape or monofilament according to the present disclosure includes the step of orienting the tape or monofilament at a temperature below a melt temperature of the polyethylene composition. In one or more embodiments, the step of orienting the tape or monofilament includes stretching the tape or monofilament at a draw ratio of 3 to 12. In one or more embodiments, the process for making the tape or monofilament according to the present disclosure includes the step of annealing the tape or monofilament. In one or more embodiments, annealing step can be carried out at 100 °C or above. In one or more embodiments, the tape or monofilament is annealed at a fixed length.

The present disclosure also provides for an artificial turf that comprises a base material, and one or more tapes and/or monofilaments having a decitex of greater than 500 g/10,000 m, the one or more tapes and/or monofilaments implanted into and extending from the base material, where the one or more tapes and/or monofilaments comprises a polyethylene composition comprising (a) less than or equal to 100 percent by weight of the polyethylene composition derived from ethylene monomers and (b) less than 20 percent by weight of the polyethylene composition derived from one or more $\alpha$-olefin monomers. The polyethylene composition used in the one or more tapes and/or monofilaments of the artificial turf can have a density in the range of 0.920 to 0.970 g/cm$^3$, a molecular weight distribution ($M_w/M_n$) in the range of 1.70 to 3.5, a melt index ($I_2$) in the range of 0.2 to 50 g/10 minutes, a molecular weight distribution ($M_z/M_w$) in the range of less than 2.5, vinyl unsaturation of less than 0.1 vinyls per one thousand carbon atoms present in the backbone of the polyethylene composition.

In one or more embodiments, the one or more tapes and/or monofilaments implanted into and extending from the base material can includes tufts of the one or more tapes or monofilaments implanted into and extending from the base material. In one or more embodiments, the artificial turf according to the present disclosure can further include particles of an in-fill layer between the one or more tapes and/or monofilaments and adjacent the base material. In one or more embodiments, the particles of the in-fill layer include particles of a rubber. In one or more embodiments, the particles of the in-fill layer may comprise, at least in part, the polyethylene composition of the present disclosure.

Embodiments of the present disclosure also include a process for fabricating artificial turf comprising the steps of (1) providing a base material; (2) providing a tape or monofilament having a decitex of greater than 500 g/10,000 m, the tape or monofilament comprising a polyethylene composition and (3) implanting the tape or monofilament into the base material with at least a portion of the tape and/or monofilament that extends from the base material to form the artificial turf. In one or more embodiments, the polyethylene composition comprises (a) less than or equal to 100 percent by weight of the polyethylene composition derived from ethylene monomers, and (b) less than 20 percent by weight of the polyethylene composition derived from one or more $\alpha$-olefin monomers. The polyethylene composition of the tape and/or monofilament used in the artificial turf can have a density in the range of 0.920 to 0.970 g/cm$^3$, a molecular weight distribution ($M_w/M_n$) in the range of 1.70 to 3.50, a melt index ($I_2$) in the range of 0.2 to 50 g/10 minutes, a molecular weight distribution ($M_z/M_w$) in the range of less than 2.5, vinyl unsaturation of less than 0.1 vinyls per one thousand carbon atoms present in the backbone of the polyethylene composition.

## Brief Description of the Drawings

For the purpose of illustrating the disclosure, there is shown in the drawings a form that is exemplary; it being understood, however, that this disclosure is not limited to the precise arrangements and instrumentalities shown.

Fig. 1 is a cross-sectional view of an artificial turf having the tape or monofilament according to one embodiment of the present disclosure.

Fig. 2 is a graph illustrating the Elongation at break versus tenacity for extruded tapes of Examples 1 and 2, and Comparative Example A.

## Detailed Description

The present disclosure relates to tapes or monofilaments made of a polyethylene composition, where the tapes or monofilaments of the present disclosure demonstrate, among other things, simultaneously improved elongation at break (residual elongation percent %) and tenacity (N/decitex) as compared to conventional polymer compositions. For the various embodiments, the polyethylene composition of the present disclosure provides a low vinyl unsaturation and a narrow molecular weight distribution, as discussed herein. These properties of the polyethylene composition when combined with steps of orienting the tapes and/or monofilaments formed from the polyethylene composition, as discussed herein, help to impart synergistic improvements in the durability, tenacity, residual elongation and softness in the resulting tapes and/or monofilaments. For the various embodiments, improvements in the durability of the tape or monofilament made of the polyethylene composition include those in the area of stability with respect to ultraviolet (UV) light (i.e. UV stability).

The polyethylene composition according to the present disclosure includes less than or equal to 100 percent by weight of the polyethylene composition derived from ethylene monomers and less than 20 percent by weight of the polyethylene composition derived from one or more α-olefin monomers. The polyethylene composition used in the present disclosure has a density in the range of 0.920 to 0.970 g/cm$^3$, a molecular weight distribution ($M_w/M_n$) in the range of 1.70 to 3.50, a melt index ($I_2$) in the range of 0.2 to 50 g/10 minutes, a molecular weight distribution ($M_z/M_w$) in the range of less than 2.5, and a vinyl unsaturation of less than 0.1 vinyls per one thousand carbon atoms present in the backbone of the composition. Tapes and/or monofilaments formed from the polyethylene composition have a decitex of greater than 500 g/10,000 m.

The polyethylene composition according to the present disclosure possesses unique properties and differentiated performance in different applications, as described in further details herein.

The term (co)polymerization, as used herein, refers to the polymerization of ethylene monomers and optionally one or more monomers, e.g. one or more α-olefin monomers. Thus, the term (co)polymerization refers to both polymerization of ethylene monomers and copolymerization of ethylene monomers and one or more monomers, e.g. one or more α-olefin monomers.

The polyethylene composition according to the present disclosure has a density in the range of 0.920 to 0.970 g/cm$^3$. All individual values and subranges from 0.920 to 0.970 g/cm$^3$ are included herein and disclosed herein; for example, the density can be from a lower limit of 0.920, 0.923, 0.925, 0.928, 0.930, 0.936, 0.940, or 0.945 g/cm$^3$ to an upper limit of 0.941, 0.947, 0.954, 0.955, 0.956 0.959, 0.960, 0.965, 0.968, or 0.970 g/cm$^3$. For example, the polyethylene composition may have a density in the range of 0.925 to 0.960 g/cm$^3$; or in the alternative, the polyethylene composition may have a density in the range of 0.940 to 0.960 g/cm$^3$; or in the alternative, the polyethylene composition may have a density in the range of 0.945 to 0.956 g/cm$^3$; or in the alternative, the polyethylene composition may have a density in the range of 0.920 to 0.955 g/cm$^3$; or in the alternative, the polyethylene composition may have a density in the range of 0.920 to 0.960 g/cm$^3$; or in the alternative, the polyethylene composition may have a density in the range of 0.920 to 0.950 g/cm$^3$; or in the alternative, the polyethylene composition may have a density in the range of 0.930 to 0.965 g/cm$^3$; or in the alternative, the polyethylene composition may have a density in the range of 0.930 to 0.960 g/cm$^3$; or in the alternative, the polyethylene composition may have a density in the range of 0.930 to 0.955 g/cm$^3$; or in the alternative, the polyethylene composition may have a density in the range of 0.930 to 0.950 g/cm$^3$; or in the alternative, the polyethylene composition may have a density in the range of 0.940 to 0.965 g/cm$^3$; or in the alternative, the polyethylene composition may have a density in the range of 0.940 to 0.960 g/cm$^3$; or in the alternative, the polyethylene composition may have a density in the range of 0.940 to 0.955 g/cm$^3$; or in the alternative, the polyethylene composition may have a density in the range of 0.940 to 0.950 g/cm$^3$.

The polyethylene composition according to the present disclosure has a molecular weight distribution ($M_w/M_n$) in the range of 1.70 to 3.50. All individual values and subranges from 1.70 to 3.50 are included herein and disclosed herein; for example, the molecular weight distribution ($M_w/M_n$) can be from a lower limit of 1.70, 1.80, 1.90, 2.10, 2.30, 2.50, 2.70, 2.80, 2.90, 3.10 or 3.30 to an upper limit of 1.85, 1.95, 2.15, 2.35, 2.55, 2.75, 2.95, 3.15, 3.20, 3.35 or 3.50. For example, the polyethylene composition may have a molecular weight distribution ($M_w/M_n$) in the range of 1.70 to 3.40; or in the alternative, the polyethylene composition may have a molecular weight distribution ($M_w/M_n$) in the range of 1.70 to 3.50; or in the alternative, the polyethylene composition may have a molecular weight distribution ($M_w/M_n$) in the range of 1.70 to 3.35; or in the alternative, the polyethylene composition may have a molecular weight distribution ($M_w/M_n$) in the range of 1.70 to 3.15; or in the alternative, the polyethylene composition may have a molecular weight distribution ($M_w/M_n$) in the range of 1.70 to 2.95; or in the alternative, the polyethylene composition may have a molecular weight distribution ($M_w/M_n$) in the range of 1.70 to 2.75; or in the alternative, the polyethylene composition may have a molecular weight distribution ($M_w/M_n$) in the range of 1.70 to 2.55; or in the alternative, the polyethylene composition may have a molecular weight distribution ($M_w/M_n$) in the range of 1.70 to 2.35; or in the alternative, the polyethylene composition may have a molecular weight distribution ($M_w/M_n$) in the range of 1.70 to 2.15; or in the alternative, the polyethylene composition may have a molecular weight distribution ($M_w/M_n$) in the range of 1.70 to 1.95; or in the alternative, the polyethylene composition may have a molecular weight distribution ($M_w/M_n$) in the range of 1.70 to 1.85.

The polyethylene composition according to the instant invention has a melt index ($I_2$) in the range of 0.2 to 50 g/10 minutes. All individual values and subranges from 0.2 to 50 g/10 minutes are included herein and disclosed herein; for example, the melt index ($I_2$) can be from a lower limit of 0.2, 0.5, 0.8, 1, 2, 3, 5, 10, 20, 40 g/10 minutes, to an upper limit of 5, 10, 30, 50 g/10 minutes. For example, the polyethylene composition may have a melt index ($I_2$) in the range of 1 to 30 g/10 minutes; or in the alternative, the polyethylene composition may have a melt index ($I_2$) in the range of 1 to 10 g/10 minutes; or in the alternative, the polyethylene composition may have a melt index ($I_2$) in the range of 1 to 20 g/10 minutes; or in the alternative, the polyethylene composition may have a melt index ($I_2$) in the range of 1 to 5 g/10 minutes; or in the alternative, the polyethylene composition may have a melt index ($I_2$) in the range of 0.3 to 20 g/10 minutes; or in the alternative, the polyethylene composition may have a melt index ($I_2$) in the range of 0.3 to 10 g/10 minutes; or in the alternative, the polyethylene composition may have a melt index ($I_2$) in the range of 0.8 to 5 g/10min.

The polyethylene composition according to the present disclosure has a molecular weight ($M_w$) in the range of 15,000 to 150,000 daltons. All individual values and subranges from 15,000 to 150,000 daltons are included herein and disclosed herein; for example, the molecular weight ($M_w$) can be from a lower limit of 15,000, 20,000, 25,000, 30,000, 34,000, 40,000, 50,000, 60,000, 70,000, 80,000, 90,000, 95,000, or 100,000 daltons to an upper limit of 20,000, 25,000, 30,000, 33,000, 40,000, 50,000, 60,000, 70,000, 80,000, 90,000, 95,000, 100,000, 115,000, 125,000, or 150,000. For example, the polyethylene composition may have a molecular weight ($M_w$) in the range of 15,000 to 125,000 daltons; or in the alternative, the polyethylene composition may have a molecular weight ($M_w$) in the range of 15,000 to 115,000 daltons; or in the alternative, the polyethylene composition may have a molecular weight ($M_w$) in the range of 15,000 to 100,000 daltons; or in the alternative, the polyethylene composition may have a molecular weight ($M_w$) in the range of 20,000 to 150,000 daltons; or in the alternative, the polyethylene composition may have a molecular weight ($M_w$) in the range of 30,000 to 150,000 daltons; or in the alternative, the polyethylene composition may have a molecular weight ($M_w$) in the range of 40,000 to 150,000 daltons; or in the alternative, the polyethylene composition may have a molecular weight ($M_w$) in the range of 50,000 to 150,000 daltons; or in the alternative, the polyethylene composition may have a molecular weight ($M_w$) in the range of 60,000 to 150,000 daltons; or in the alternative, the polyethylene composition may have a molecular weight ($M_w$) in the range of 80,000 to 150,000 daltons.

The polyethylene composition may have molecular weight distribution ($M_z/M_w$) in the range of less than 2.5. All individual values and subranges from less than 2.5 are included herein and disclosed herein; for example, the polyethylene composition may have a molecular weight distribution ($M_z/M_w$) in the range of 2.2 or less ; or in the alternative, the polyethylene composition may have a molecular weight distribution ($M_z/M_w$) in the range of 2.1 or less; or in the alternative, the polyethylene composition may have a molecular weight distribution ($M_z/M_w$) in the range of less than 2.00; or in the alternative, the polyethylene composition may have a molecular weight distribution ($M_z/M_w$) in the range of less than 1.92; or in the alternative, the polyethylene composition may have a molecular weight distribution ($M_z/M_w$) in the range of less than 1.86; or in the alternative, the polyethylene composition may have a molecular weight distribution ($M_z/M_w$) in the range of less than 1.78; or in the alternative, the polyethylene composition may have a molecular weight distribution ($M_z/M_w$) in the range of less than 1.70; or in the alternative, the polyethylene composition may have a molecular weight distribution ($M_z/M_w$) in the range of less than 1.62; or in the alternative, the polyethylene composition may have a molecular weight distribution ($M_z/M_w$) in the range of less than 1.54; or in the alternative, the polyethylene composition may have a molecular weight distribution ($M_z/M_w$) in the range of less than 1.48.

The polyethylene composition may have a vinyl unsaturation of less than 0.1 vinyls per one thousand carbon atoms present in the backbone of the polyethylene composition. The vinyl unsaturation values provided herein are target values to be achieved for the polyethylene composition. All individual values and subranges from less than 0.1 are included herein and disclosed herein; for example, the polyethylene composition may have a vinyl unsaturation of less than 0.08 vinyls per one thousand carbon atoms present in the backbone of the polyethylene composition; or in the alternative, the polyethylene composition may have a vinyl unsaturation of less than 0.06 vinyls per one thousand carbon atoms present in the backbone of the polyethylene composition; or in the alternative, the polyethylene composition may have a vinyl unsaturation of less than 0.05 vinyls per one thousand carbon atoms present in the backbone of the polyethylene composition; or in the alternative, the polyethylene composition may have a vinyl unsaturation of less than 0.04 vinyls per one thousand carbon atoms present in the backbone of the polyethylene composition; or in the alternative, the polyethylene composition may have a vinyl unsaturation of less than 0.02 vinyls per one thousand carbon atoms present in the backbone of the polyethylene composition; or in the alternative, the polyethylene composition may have a vinyl unsaturation of less than 0.01 vinyls per one thousand carbon atoms present in the backbone of the polyethylene composition; or in the alternative, the polyethylene composition may have a vinyl unsaturation of less than 0.001 vinyls per one thousand carbon atoms present in the backbone of the polyethylene composition.

The polyethylene composition may comprise less than 25 percent by weight of the polyethylene composition derived from one or more $\alpha$-olefin monomers. All individual values and subranges from less than 25 weight percent are included herein and disclosed herein; for example, the polyethylene composition may comprise less than 20 percent by weight of the polyethylene composition derived from one or more $\alpha$-olefin monomers; or in the alternative, the polyethylene composition may comprise less than 15 percent by weight of the polyethylene composition derived from one or more $\alpha$-olefin monomers; or in the alternative, the polyethylene composition may comprise less than 12 percent by weight of the polyethylene composition derived from one or more $\alpha$-olefin monomers; or in the alternative, the polyethylene composition may comprise less than 11 percent by weight of the polyethylene composition derived from one or more $\alpha$-olefin monomers; or in the alternative, the polyethylene composition may comprise less than 9 percent by weight of the polyethylene composition derived from one or more $\alpha$-olefin monomers; or in the alternative, the polyethylene composition may comprise less than 7 percent by weight of the polyethylene composition derived from one or more $\alpha$-olefin monomers; or in the alternative, the polyethylene composition may comprise less than 5 percent by weight of the polyethylene composition derived from one or more $\alpha$-olefin monomers; or in the alternative, the polyethylene composition may comprise less than 3 percent by weight of the polyethylene composition derived from one or more $\alpha$-olefin monomers; or in the alternative, the polyethylene composition may comprise less than 1 percent by weight of the polyethylene composition derived from one or more $\alpha$-olefin monomers; or in the alternative, the polyethylene composition may comprise less than 0.5 percent by weight of the polyethylene composition derived from one or more $\alpha$-olefin monomers.

The $\alpha$-olefin monomers typically have no more than 20 carbon atoms. For example, the $\alpha$-olefin monomers may preferably have 3 to 10 carbon atoms, and more preferably 3 to 8 carbon atoms. Exemplary $\alpha$-olefin monomers include, but are not limited to, propylene, 1-butene, 1-pentene, 1-hexene, 1-heptene, 1-octene, 1-nonene, 1-decene, and 4-methyl-1-pentene. The one or more $\alpha$-olefin monomers may, for example, be selected from the group consisting of propylene, 1-butene, 1-hexene, and 1-octene; or in the alternative, from the group consisting of 1-hexene and 1-octene.

The polyethylene composition may comprise at least 75 percent by weight of the polyethylene composition derived from ethylene monomers. All individual values and subranges from at least 75 weight percent are included herein and disclosed herein; the polyethylene composition may comprise at least 80 percent by weight of the polyethylene composition derived from ethylene monomers; or in the alternative, for example, the polyethylene composition may comprise at least 85 percent by weight of the polyethylene composition derived from ethylene monomers; or in the alternative, the polyethylene composition may comprise at least 88 percent by weight of the polyethylene composition derived from ethylene monomers; or in the alternative, the polyethylene composition may comprise at least 89 percent by weight of the polyethylene composition derived from ethylene monomers; or in the alternative, the polyethylene composition may comprise at least 91 percent by weight of the polyethylene composition derived from ethylene monomers; or in the alternative, the polyethylene composition may comprise at least 93 percent by weight of the polyethylene composition derived from ethylene monomers; or in the alternative, the polyethylene composition may comprise at least 95 percent by weight of the polyethylene composition derived from ethylene monomers; or in the alternative, the polyethylene composition may comprise at least 97 percent by weight of the polyethylene composition derived from ethylene monomers; or in the alternative, the polyethylene composition may comprise at least 99 percent by weight of the polyethylene composition derived from ethylene monomers; or in the alternative, the polyethylene composition may comprise at least 99.5 percent by weight of the polyethylene composition derived from ethylene monomers.

The polyethylene composition of the present disclosure is substantially free of any long chain branching, and preferably, the polyethylene composition of the present disclosure is free of any long chain branching. Substantially free of any long chain branching, as used herein, refers to a polyethylene composition preferably substituted with less than about 0.1 long chain branching per 1000 total carbons, and more preferably, less than about 0.01 long chain branching per 1000 total carbons. In the alternative, the polyethylene composition of the present disclosure is free of any long chain branching.

The polyethylene composition may have a short chain branching distribution breadth (SCBDB) in the range of 2 to 40 °C. All individual values and subranges from 2 to 40 °C are included herein and disclosed herein; for example, the short chain branching distribution breadth (SCBDB) can be from a lower limit of 2, 3, 4, 5, 6, 8, 10, 12, 15, 18, 20, 25, or 30 °C to an upper limit of 40, 35, 30, 29, 27, 25, 22, 20, 15, 12, 10, 8, 6, 4, or 3 °C For example, the polyethylene composition may have a short chain branching distribution breadth (SCBDB) in the range of 2 to 35 °C; or in the alternative, the polyethylene composition may have a short chain branching distribution breadth (SCBDB) in the range of 2 to 30 °C; or in the alternative, the polyethylene composition may have a short chain branching distribution breadth (SCBDB) in the range of 2 to 25 °C; or in the alternative, the polyethylene composition may have a short chain branching distribution breadth (SCBDB) in the range of 2 to 20 °C; or in the alternative, the polyethylene composition may have a short chain branching distribution breadth (SCBDB) in the range of 2 to 15 °C; or in the alternative, the polyethylene composition may have a short chain branching distribution breadth (SCBDB) in the range of 2 to 10 °C; or in the alternative, the polyethylene composition may have a short chain branching distribution breadth (SCBDB) in the range of 2 to 5 °C; or in the alternative, the polyethylene composition may have a short chain branching distribution breadth (SCBDB) in the range of 4 to 35 °C; or in the alternative, the polyethylene composition may have a short chain branching distribution breadth (SCBDB) in the range of 4 to 30 °C; or in the alternative, the polyethylene composition may have a short chain branching distribution breadth (SCBDB) in the range of 4 to 25 °C; or in the alternative, the polyethylene composition may have a short chain branching distribution breadth (SCBDB) in the range of 4 to 20 °C; or in the alternative, the polyethylene composition may have a short chain branching distribution breadth (SCBDB) in the range of 4 to 15 °C; or in the alternative, the polyethylene composition may have a short chain branching distribution breadth (SCBDB) in the range of 4 to 10 °C; or in the alternative, the polyethylene composition may have a short chain branching distribution breadth (SCBDB) in the range of 4 to 5 °C. In the alternative, the polyethylene composition may have a short chain branching distribution breadth (SCBDB) in the range less than $((0.0312)(\text{melt index } (I_2) + 2.87)$ °C.

The polyethylene composition may have a shear viscosity in the range of 20 to 250 Pascal-s at 3000s$^{-1}$ shear rate measured at 190 °C. All individual values and subranges from 20 to 250 Pascal-s at 3000s$^{-1}$ shear rate measured at 190 °C are included herein and disclosed herein; for example, the polyethylene composition may have a shear viscosity in the range of 20 to 200 Pascal-s at 3000s$^{-1}$ shear rate measured at 190 °C; or in the alternative, the polyethylene composition may have a shear viscosity in the range of 20 to 150 Pascal-s at 3000s$^{-1}$ shear rate measured at 190 °C; or in the alternative, the polyethylene composition may have a shear viscosity in the range of 20 to 130 Pascal-s at 3000s$^{-1}$ shear rate measured at 190 °C; or in the alternative, the polyethylene composition may have a shear viscosity in the range of 25 to 150 Pascal-s at 3000s$^{-1}$ shear rate measured at 190 °C; or in the alternative, the polyethylene composition may have a shear viscosity in the range of 25 to 80 Pascal-s at 3000s$^{-1}$ shear rate measured at 190 °C; or in the alternative, the polyethylene composition may have a shear viscosity in the range of 25 to 55 Pascal-s at 3000s$^{-1}$ shear rate measured at 190 °C; or in the alternative, the polyethylene composition may have a shear viscosity in the range of 25 to 50 Pascal-s at 3000s$^{-1}$ shear rate measured at 190 °C; or in the alternative, the polyethylene composition may have a shear viscosity in the range of 25 to 45 Pascal-s at 3000s$^{-1}$ shear rate measured at 190 °C; or in the alternative, the polyethylene composition may have a shear viscosity in the range of 25 to 45 Pascal-s at 3000s$^{-1}$ shear rate measured at 190 °C; or in the alternative, the polyethylene composition may have a shear viscosity in the range of 25 to 35 Pascal-s at 3000s$^{-1}$ shear rate measured at 190 °C; or in the alternative, the polyethylene composition may have a shear viscosity in the range of 25 to 30 Pascal-s at 3000s$^{-1}$ shear rate measured at 190 °C; or in the alternative, the polyethylene composition may have a shear viscosity in the range of 30 to 55 Pascal-s at 3000s$^{-1}$ shear rate measured at 190 °C; or in the alternative, the polyethylene composition may have a shear viscosity in the range of 35 to 55 Pascal-s at 3000s$^{-1}$ shear rate measured at 190 °C; or in the alternative, the polyethylene composition may have a shear viscosity in the range of 40 to 55 Pascal-s at 3000s$^{-1}$ shear rate measured at 190 °C; or in the alternative, the polyethylene composition may have a shear viscosity in the range of 45 to 55 Pascal-s at 3000s$^{-1}$ shear rate measured at 190 °C; or in the alternative, the polyethylene composition may have a shear viscosity in the range of 50 to 55 Pascal-s at 3000s$^{-1}$ shear rate measured at 190 °C.

The polyethylene composition may further comprise less than or equal to 100 parts by weight of hafnium residues remaining from the hafnium based metallocene catalyst per one million parts of polyethylene composition. All individual values and subranges from less than or equal to 100 ppm are included herein and disclosed herein; for example, the polyethylene composition may further comprise less than or equal to 10 parts by weight of hafnium residues remaining from the hafnium based metallocene catalyst per one million parts of polyethylene composition; or in the alternative, the polyethylene composition may further comprise less than or equal to 8 parts by weight of hafnium residues remaining from the hafnium based metallocene catalyst per one million parts of polyethylene composition; or in the alternative, the polyethylene composition may further comprise less than or equal to 6 parts by weight of hafnium residues remaining from the hafnium based metallocene catalyst per one million parts of polyethylene composition; or in the alternative, the polyethylene composition may further comprise less than or equal to 4 parts by weight of hafnium residues remaining from the hafnium based metallocene catalyst per one million parts of polyethylene composition; or in the alternative, the polyethylene composition may further comprise less than or equal to 2 parts by weight of hafnium residues remaining from the hafnium based metallocene catalyst per one million parts of polyethylene composition; or in the alternative, the polyethylene composition may further comprise less than or equal to 1.5 parts by weight of hafnium residues remaining from the hafnium based metallocene catalyst per one million parts of polyethylene composition; or in the alternative, the polyethylene composition may further comprise less than or equal to 1 parts by weight of hafnium residues remaining from the hafnium based metallocene catalyst per one million parts of polyethylene composition; or in the alternative, the polyethylene composition may further comprise less than or equal to 0.75 parts by weight of hafnium residues remaining from the hafnium based metallocene catalyst per one million parts of polyethylene composition; or in the alternative, the polyethylene composition may further comprise less than or equal to 0.5 parts by weight of hafnium residues remaining from the hafnium based metallocene catalyst per one million parts of polyethylene composition the polyethylene composition may further comprise from 0.1 to 100 parts by weight of hafnium residues remaining from the hafnium based metallocene catalyst per one million parts of polyethylene composition. The hafnium residues remaining from the hafnium based metallocene catalyst in the polyethylene composition may be measured by x-ray fluorescence (XRF), which is calibrated to reference standards. The polymer resin granules were compression molded at elevated temperature into plaques having a thickness of about 3/8 of an inch for the x-ray measurement in a preferred method. At very low concentrations of metal, such as below 0.1 ppm, ICP-AES would be a suitable method to determine metal residues present in the polyethylene composition. In one embodiment, the polyethylene composition has substantially no chromium, zirconium or titanium content, that is, no or only what would be considered by those skilled in the art, trace amounts of these metals are present, such as, for example, less than 0.001 ppm.

The polyethylene composition in accordance with the present disclosure may have less than 2 peaks on an elution temperature-eluted amount curve determined by continuous temperature rising elution fraction method at equal or above 30 °C, wherein the purge peak which is below 30 °C is excluded. In the alternative, the polyethylene composition may have only 1 peak or less on an elution temperature-eluted amount curve determined by continuous temperature rising elution fraction method at equal or above 30 °C, wherein the purge peak which is below 30 °C is excluded. In the alternative, the polyethylene composition may have only 1 peak on an elution temperature-eluted amount curve determined by continuous temperature rising elution fraction method at equal or above 30 °C, wherein the purge peak which is below 30 °C is excluded. In addition, artifacts generated due to instrumental noise at either side of a peak are not considered to be peaks.

The polyethylene composition may further comprise additional components such as one or more other polymers and/or one or more additives. Such additives include, but are not limited to, antistatic agents, color enhancers, dyes, lubricants, fillers, pigments, primary antioxidants, secondary antioxidants, processing aids, UV stabilizers, anti-blocks, slip agents, tackifiers, fire retardants, antimicrobial agents, odor reducer agents, anti fungal agents, and combinations thereof. The polyethylene composition may contain various amounts of additives.

The polyethylene composition may include less than 5 percent (%) of the additive by weight of the polyethylene composition. For example, the polyethylene composition can have less than 5 percent (%) by weight of the polyethylene composition (e.g., less than 50000 parts-per-million (ppm) of the polyethylene composition) of a UV stabilizer. All individual values and subranges for the UV stabilizer of less than 5 % by weight of the polyethylene composition are included herein and disclosed herein. For example, the polyethylene composition can have less than 4 percent (%) by weight of the polyethylene composition (e.g., less than 40000 ppm of the polyethylene composition) of a UV stabilizer; or in the alternative, the polyethylene composition may have less than 3 percent (%) by weight of the polyethylene composition (e.g., less than 30000 ppm of the polyethylene composition) of a UV stabilizer; or in the alternative, the polyethylene composition may have less than 2 percent (%) by weight of the polyethylene composition (e.g., less than 20000 ppm of the polyethylene composition) of a UV stabilizer; or in the alternative, the polyethylene composition may have less than 1 percent (%) by weight of the polyethylene composition (e.g., less than 10000 ppm of the polyethylene composition) of a UV stabilizer; or in the alternative, the polyethylene composition may have less than 0.5 percent (%) by weight of the polyethylene composition (e.g., less than 5000 ppm of the polyethylene composition) of a UV stabilizer; or in the alternative, the polyethylene composition may have zero (0) percent (%) by weight of the polyethylene composition of a UV stabilizer.

In an additional embodiment, the polyethylene composition may comprise from 0 to about 10 percent by the combined weight of such additives, based on the weight of the polyethylene composition including such additives. All individual values and subranges from 0 to about 10 weight percent are included herein and disclosed herein; for example, the polyethylene composition may comprise from 0.1 to 7 percent by the combined weight of additives, based on the weight of the polyethylene composition including such additives; in the alternative, the polyethylene composition may comprise from 0.1 to 5 percent by the combined weight of additives, based on the weight of the polyethylene composition including such additives; or in the alternative, the polyethylene composition may comprise from 0.1 to 3 percent by the combined weight of additives, based on the weight of the polyethylene composition including such additives; or in the alternative, the polyethylene composition may comprise from 0.1 to 2 percent by the combined weight of additives, based on the weight of the polyethylene composition including such additives; or in the alternative, the polyethylene composition may comprise from 0.1 to 1 percent by the combined weight of additives, based on the weight of the polyethylene composition including such additives; or in the alternative, the polyethylene composition may comprise from 0.1 to 0.5 percent by the combined weight of additives, based on the weight of the polyethylene composition including such additives. In one or more embodiments, the polyethylene composition including no additives (e.g., no UV stabilizer).

Antioxidants, such as Irgafos™ 168, Irganox™ 3114, Cyanox™ 1790, Irganox™ 1010, Irganox™ 1076, Irganox™ 1330, Irganox™ 1425WL, Irgastab™ may be used to protect the polyethylene composition from thermal and/or oxidative degradation. Irganox™ 1010 is tetrakis (methylene (3,5-di-tert-butyl-4hydroxyhydrocinnamate), commercially available from Ciba Geigy Inc.; Irgafos™ 168 is tris (2,4 di-tert-butylphenyl) phosphite, commercially available from Ciba Geigy Inc.; Irganox™ 3114 is [1,3,5-Tris(3,5-di-(tert)-butyl-4-hydroxybenzyl)-1,3,5-triazine-2,4,6(1H,3H,5H)-trione], commercially available from Ciba Geigy Inc.; Irganox™ 1076 is (Octadecyl 3,5-di-tert-butyl-4 hydroxycinnamate), commercially available from Ciba Geigy Inc.; Irganox™ 1330 is [1,3,5-Trimethyl-2,4,6-tris(3,5-di-tert-butyl-4-hydroxybenzyl)benzene], commercially available from Ciba Geigy Inc.; Irganox™ 1425WL is (Calcium bis[fluoriding(3,5-di-(tert)-butyl-4-hydroxybenzyl)phosphonate]), commercially available from Ciba Geigy Inc.; Irgastab™ is [bis(hydrogenated tallow alkyl)amines, oxidized], commercially available from Ciba Geigy Inc.; Cyanox™ 1790is [Tris (4-t-butyl-3-hydroxy-2,6-dimethylbenzyl)-s-triazine-2,4,6-(1H,3H,5H)-trione], commercially available from Cytec Industries, Inc. Other commercially available antioxidants include, but are not limited to, Ultranox™ 626, a Bis (2, 4-di-t-butylphenyl) Pentaerythritol Diphosphite, commercially available from Chemtura Corporation; P-EPQ™, a Phosphonous acid, P,P'-[[1,1'-biphenyl]-4,4'-diyl]bis-, P,P,P',P'-tetrakis[2,4-bis(1,1-dimethylethyl)phenyl] ester, commercially available from Clariant Corporation; Doverphos™ 9228, a Bis (2, 4-decumylphenyl) Pentaerythritol Diphosphite, commercially available from Dover Chemical Corporation; Chimassorb™ 944, a Poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino]], commercially available from Ciba Geigy Inc.; Chimassorb™ 119, a 1,3,5-Triazine-2,4,6-triamine, N2,N2'-1,2-ethanediylbis[N2-3-[[4,6-bis[butyl(1,2,2,6,6-pentamethyl-4-piperidinyl)amino]-1,3,5-triazin-2-yl]amino]propyl]-N4,N6-dibutyl-N4,N6-bis(1,2,2,6,6-pentamethyl-4-piperidinyl)-, commercially available from Ciba Geigy Inc.; Chimassorb™ 2020, a Poly[[6-[butyl(2,2,6,6-tetramethyl-4-piperidinyl)amino]-1,3,5-triazine-2,4-diyl] [(2,2,6,6-tetramethyl-4-piperidinyl)imino]-1,6-hexanediyl[(2,2,6,6-tetramethyl-4-piperidinyl)imino]], α-[[6-[[4,6-bis(dibutylamino)-1,3,5-triazin-2-yl](2,2,6,6-tetramethyl-4-piperidinyl)amino]hexyl](2,2,6,6-tetramethyl-4-piperidinyl)amino]-ω-[4,6-bis(dibutylamino)-1,3,5-triazin-2-yl]-, commercially available from Ciba Geigy Inc.; Tinuvin™ 622, a Butanedioic acid polymer with 4-hydroxy-2,2,6,6-tetramethyl-1-piperidineethanol, commercially available from Ciba Geigy Inc.; Tinuvin™ 770, a Decanedioic acid, 1,10-bis(2,2,6,6-tetramethyl-4-piperidinyl) ester, commercially available from Ciba Geigy Inc.; Uvasorb HA™ 88, a 2,5-Pyrrolidinedione, 3-dodecyl-1-(2,2,6,6-tetramethyl-4-piperidinyl), commercially available from 3V; CYASORB™ UV-3346, a Poly[[6-(4-morpholinyl)-1,3,5-triazine-2,4-diyl][(2,2,6,6-tetramethyl-4-piperidinyl)imino]-1,6-hexanediyl[(2,2,6,6-tetramethyl-4-piperidinyl)imino]], commercially available from Cytec Industries, Inc.; CYASORB™ UV-3529, a Poly[[6-(4-morpholinyl)-1,3,5-triazine-2,4-diyl][(1,2,2,6,6-pentamethyl-4-piperidinyl)imino]-1,6-hexanediyl[(1,2,2,6,6-pentamethyl-4-piperidinyl)imino]], commercially available from Cytec Industries, Inc.; and Hostavin™ N 30, a 7-Oxa-3,20-iazadispiro[5.1.11.2]heneicosan-21-one, 2,2,4,4-tetramethyl-20-(2-oxiranylmethyl)-, polymer with 2-(chloromethyl)oxirane, commercially available from Clariant Corporation.

Conventional ethylene monomers (co)polymerization reaction processes may be employed to produce the polyethylene composition. Such ethylene monomers (co)polymerization reaction processes include, but are not limited to, gas phase polymerization process, slurry phase polymerization process, liquid phase polymerization process, and combinations thereof using one or more conventional reactors, e.g. fluidized bed gas phase reactors, loop reactors, stirred tank reactors, batch reactors in parallel, series, and/or any combinations thereof. In the alternative, the polyethylene composition may be produced in a high pressure reactor via a coordination catalyst system. For example, the polyethylene composition may be produced via gas phase polymerization process in a single gas phase reactor; however, the present disclosure is not so limited, and any of the above polymerization processes may be employed. In one embodiment, the polymerization reactor may comprise of two or more reactors in series, parallel, or combinations thereof. Preferably, the polymerization reactor is a single reactor, e.g. a fluidized bed gas phase reactor. In another embodiment, the gas phase polymerization reactor is a continuous polymerization reactor comprising one or more feed streams. In the polymerization reactor, the one or more feed streams are combined together, and the gas comprising ethylene monomers and optionally one or more monomers, e.g. one or more $\alpha$-olefins, are flowed or cycled continuously through the polymerization reactor by any suitable means. The gas comprising ethylene monomers and optionally one or more monomers, e.g. one or more $\alpha$-olefins, may be fed up through a distributor plate to fluidize the bed in a continuous fluidization process.

In production, a hafnium based metallocene catalyst system including a co-catalyst, as described herein below in further details, ethylene monomers, optionally one or more alpha-olefin monomers, hydrogen, optionally one or more inert gases and/or liquids, e.g. $N_2$, isopentane, and hexane, and optionally one or more continuity additive, e.g. ethoxylated stearyl amine or aluminum distearate or combinations thereof, are continuously fed into a reactor, e.g. a fluidized bed gas phase reactor. The reactor may be in fluid communication with one or more discharge tanks, surge tanks, purge tanks, and/or recycle compressors. The temperature in the reactor is typically in the range of 70 to 115 °C, preferably 75 to 110 °C, more preferably 75 to 100 °C, and the pressure is in the range of 15 to 30 atm, preferably 17 to 26 atm. A distributor plate at the bottom of the polymer bed provides a uniform flow of the upflowing monomer, comonomer, and inert gases stream. A mechanical agitator may also be provided to facilitate contact between the solid particles and the comonomer gas stream. The fluidized bed, a vertical cylindrical reactor, may have a bulb shape at the top to facilitate the reduction of gas velocity; thus, permitting the granular polymer to separate from the upflowing gases. The unreacted gases are then cooled to remove the heat of polymerization, recompressed, and then recycled to the bottom of the reactor. Once resin is removed from the reactor, it is transported to a purge bin to purge the residual hydrocarbons. Moisture may be introduced to react with residual catalyst and co-catalyst prior to exposure and reaction with oxygen. The polyethylene composition may then be transferred to an extruder to be pelletized. Such pelletization techniques are generally known. The polyethylene composition may further be melt screened. Subsequent to the melting process in the extruder, the molten composition is passed through one or more active screens, positioned in series of more than one, with each active screen having a micron retention size of from about $2\mu m$ to about $400\mu m$ (2 to 4 X $10^{-5}$ m), and preferably about $2\mu m$ to about $300\mu m$ (2 to 3 X $10^{-5}$ m), and most preferably about $2\mu m$ to about $70\mu m$ (2 to 7 X $10^{-6}$ m), at a mass flux of about 5 to about 100 lb/hr/in$^2$ (1.0 to about 20 kg/s/m$^2$). Such further melt screening is disclosed in U.S. Patent No. 6,485,662, which is incorporated herein by reference to the extent that it discloses melt screening.

In an embodiment of a fluidized bed reactor, a monomer stream is passed to a polymerization section. The fluidized bed reactor may include a reaction zone in fluid communication with a velocity reduction zone. The reaction zone includes a bed of growing polymer particles, formed polymer particles and catalyst composition particles fluidized by the continuous flow of polymerizable and modifying gaseous components in the form of make-up feed and recycle fluid through the reaction zone. Preferably, the make-up feed includes polymerizable monomer, most preferably ethylene monomers and optionally one or more $\alpha$-olefin monomers, and may also include condensing agents as is known in the art and disclosed in, for example, U.S. Pat. No. 4,543,399, U.S. Pat. No. 5,405,922, and U.S. Pat. No. 5,462,999.

The fluidized bed has the general appearance of a dense mass of individually moving particles, preferably polyethylene particles, as created by the percolation of gas through the bed. The pressure drop through the bed is equal to or slightly greater than the weight of the bed divided by the cross-sectional area. It is thus dependent on the geometry of the reactor. To maintain a viable fluidized bed in the reaction zone, the superficial gas velocity through the bed must exceed the minimum flow required for fluidization. Preferably, the superficial gas velocity is at least two times the minimum flow velocity. Ordinarily, the superficial gas velocity does not exceed 1.5 m/sec and usually no more than 0.76 m/sec is sufficient.

In general, the height to diameter ratio of the reaction zone can vary in the range of about 2:1 to about 5:1. The range, of course, can vary to larger or smaller ratios and depends upon the desired production capacity. The cross-sectional area of the velocity reduction zone is typically within the range of about 2 to about 3 multiplied by the cross-sectional area of the reaction zone.

The velocity reduction zone has a larger inner diameter than the reaction zone, and can be conically tapered in shape. As the name suggests, the velocity reduction zone slows the velocity of the gas due to the increased cross sectional area. This reduction in gas velocity drops the entrained particles into the bed, reducing the quantity of entrained particles that flow from the reactor. The gas exiting the overhead of the reactor is the recycle gas stream.

The recycle stream is compressed in a compressor and then passed through a heat exchange zone where heat is removed before the stream is returned to the bed. The heat exchange zone is typically a heat exchanger, which can be of the horizontal or vertical type. If desired, several heat exchangers can be employed to lower the temperature of the cycle gas stream in stages. It is also possible to locate the compressor downstream from the heat exchanger or at an intermediate point between several heat exchangers. After cooling, the recycle stream is returned to the reactor through a recycle inlet line. The cooled recycle stream absorbs the heat of reaction generated by the polymerization reaction.

Preferably, the recycle stream is returned to the reactor and to the fluidized bed through a gas distributor plate. A gas deflector is preferably installed at the inlet to the reactor to prevent contained polymer particles from settling out and agglomerating into a solid mass and to prevent liquid accumulation at the bottom of the reactor as well to facilitate easy transitions between processes that contain liquid in the cycle gas stream and those that do not and vice versa. Such deflectors are described in the U.S. Pat. No. 4,933,149 and U.S. Pat. No. 6,627,713.

The hafnium based catalyst system used in the fluidized bed is preferably stored for service in a reservoir under a blanket of a gas, which is inert to the stored material, such as nitrogen or argon. The hafnium based catalyst system is injected into the bed at a point above distributor plate. Preferably, the hafnium based catalyst system is injected at a point in the bed where good mixing with polymer particles occurs. Injecting the hafnium based catalyst system at a point above the distribution plate facilitates the operation of a fluidized bed polymerization reactor.

The monomers can be introduced into the polymerization zone in various ways including, but not limited to, direct injection through a nozzle into the bed or cycle gas line. The monomers can also be sprayed onto the top of the bed through a nozzle positioned above the bed, which may aid in eliminating some carryover of fines by the cycle gas stream.

Make-up fluid may be fed to the bed through a separate line to the reactor. A gas analyzer determines the composition of the recycle stream, and the composition of the make-up stream is adjusted accordingly to maintain an essentially steady state gaseous composition within the reaction zone. The gas analyzer can be a conventional gas analyzer that determines the recycle stream composition to maintain the ratios of feed stream components. Such equipment is commercially available from a wide variety of sources. The gas analyzer is typically positioned to receive gas from a sampling point located between the velocity reduction zone and heat exchanger.

The production rate of polyethylene composition may be conveniently controlled by adjusting the rate of catalyst composition injection, monomer concentration, or both. Since any change in the rate of catalyst composition injection will change the reaction rate and thus the rate at which heat is generated in the bed, the temperature of the recycle stream entering the reactor is adjusted to accommodate any change in the rate of heat generation. This ensures the maintenance of an essentially constant temperature in the bed. Complete instrumentation of both the fluidized bed and the recycle stream cooling system is, of course, useful to detect any temperature change in the bed so as to enable either the operator or a conventional automatic control system to make a suitable adjustment in the temperature of the recycle stream.

Under a given set of operating conditions, the fluidized bed is maintained at essentially a constant height by withdrawing a portion of the bed as product at the rate of formation of the particulate polymer product. Since the rate of heat generation is directly related to the rate of product formation, a measurement of the temperature rise of the fluid across the reactor, i.e. the difference between inlet fluid temperature and exit fluid temperature, is indicative of the rate of polyethylene composition formation at a constant fluid velocity if no or negligible vaporizable liquid is present in the inlet fluid.

On discharge of particulate polymer product from reactor, it is desirable and preferable to separate fluid from the product and to return the fluid to the recycle line. There are numerous ways known to the art to accomplish this separation. Product discharge systems which may be alternatively employed are, for example, disclosed and claimed in U.S. Pat. No. 4,621,952. Such a system typically employs at least one (parallel) pair of tanks comprising a settling tank and a transfer tank arranged in series and having the separated gas phase returned from the top of the settling tank to a point in the reactor near the top of the fluidized bed.

In the fluidized bed gas phase reactor embodiment, the reactor temperature of the fluidized bed process herein ranges from 70 °C or 75 °C, or 80 °C to 90 °C or 95 °C or 100 °C or 110 °C or 115 °C , wherein a desirable temperature range comprises any upper temperature limit combined with any lower temperature limit described herein. In general, the reactor temperature is operated at the highest temperature that is feasible, taking into account the sintering temperature of the polyethylene composition within the reactor and fouling that may occur in the reactor or recycle line(s) as well as the impact on the polyethylene composition and catalyst productivity.

The process of the present disclosure is suitable for the production of homopolymers of the polyethylene composition derived from ethylene monomers, or copolymers of the polyethylene composition derived from ethylene monomers and at least one or more other $\alpha$-olefin(s) monomers.

In order to maintain an adequate catalyst productivity in the present disclosure, it is preferable that the ethylene monomers are present in the reactor at a partial pressure at or greater than 160 psia (1100 kPa), or 190 psia (1300 kPa), or 200 psia (1380 kPa), or 210 psia (1450 kPa), or 220 psia (1515 kPa), or 230 psia (1585 kPa), or 240 psia (1655 kPa).

The comonomer, e.g. one or more $\alpha$-olefin monomers, if present in the polymerization reactor, is present at a level that will achieve the desired weight percent incorporation of the comonomer into the finished polyethylene. This may be expressed as a mole ratio of comonomer to ethylene monomers as described herein, which is the ratio of the gas concentration of comonomer moles in the cycle gas to the gas concentration of ethylene monomers moles in the cycle gas. In one embodiment of the polyethylene composition production, the comonomer is present with ethylene monomers in the cycle gas in a mole ratio range of from 0 to 0.1 (comonomer to ethylene monomers); and from 0 to 0.05 in another embodiment; and from 0 to 0.04 in another embodiment; and from 0 to 0.03 in another embodiment; and from 0 to 0.02 in another embodiment.

Hydrogen gas may also be added to the polymerization reactor(s) to control the final properties (e.g., $I_2$) of the polyethylene composition. In one embodiment, the ratio of hydrogen to total ethylene monomers (ppm $H_2$ / mol % $C_2$) in the circulating gas stream is in a range of from 0 to 60:1; in another embodiment, from 0.10:1 (0.10) to 50:1 (50); in another embodiment, from 0 to 35:1 (35); in another embodiment, from 0 to 25:1 (25); in another embodiment, from 7:1 (7) to 22:1 (22).

The hafnium based catalyst system, as used herein, refers to a catalyst composition capable of catalyzing the polymerization of ethylene monomers and optionally one or more $\alpha$-olefin comonomers to produce polyethylene. Furthermore, the hafnium based catalyst system comprises a hafnocene component. The hafnocene component may have an average particle size in the range of 12 to 35 $\mu$m; for example, the hafnocene component may have an average particle size in the range of 20 to 30 $\mu$m, e.g. 25 $\mu$. The hafnocene component may comprise mono-, bis- or tris-cyclopentadienyl-type complexes of hafnium. In one embodiment, the cyclopentadienyl-type ligand comprises cyclopentadienyl or ligands isolobal to cyclopentadienyl and substituted versions thereof. Representative examples of ligands isolobal to cyclopentadienyl include, but are not limited to, cyclopentaphenanthreneyl, indenyl, benzindenyl, fluorenyl, octahydrofluorenyl, cyclooctatetraenyl, cyclopentacyclododecene, phenanthrindenyl, 3,4-benzofluorenyl, 9-phenylfluorenyl, 8-H-cyclopent[a]acenaphthylenyl, 7H-dibenzofluorenyl, indeno[1,2-9]anthrene, thiophenoindenyl, thiophenofluorenyl, hydrogenated versions thereof (e.g., 4,5,6,7-tetrahydroindenyl, or "$H_4$Ind") and substituted versions thereof. In one embodiment, the hafnocene component is an unbridged bis-cyclopentadienyl hafnocene and substituted versions thereof. In another embodiment, the hafnocene component excludes unsubstituted bridged and unbridged bis-cyclopentadienyl hafnocenes, and unsubstituted bridged and unbridged bis-indenyl hafnocenes. The term "unsubstituted," as used herein, means that there are only hydride groups bound to the rings and no other group. Preferably, the hafnocene useful in the present disclosure can be represented by the formula (where "Hf" is hafnium):

$$Cp_nHfX_p \qquad (1)$$

wherein $n$ is 1 or 2, p is 1, 2 or 3, each Cp is independently a cyclopentadienyl ligand or a ligand isolobal to cyclopentadienyl or a substituted version thereof bound to the hafnium; and X is selected from the group consisting of hydride, halides, $C_1$ to $C_{10}$ alkyls and $C_2$ to $C_{12}$ alkenyls; and wherein when $n$ is 2, each Cp may be bound to one another through a bridging group A selected from the group consisting of $C_1$ to $C_5$ alkylenes, oxygen, alkylamine, silyl-hydrocarbons, and siloxyl-hydrocarbons. An example of $C_1$ to $C_5$ alkylenes include ethylene (--$CH_2CH_2$--) bridge groups; an example of an alkylamine bridging group includes methylamide (--($CH_3$)N--); an example of a silyl-hydrocarbon bridging group includes dimethylsilyl (--($CH_3$)$_2$Si--); and an example of a siloxyl-hydrocarbon bridging group includes (--O-($CH_3$)$_2$Si-O--). In one particular embodiment, the hafnocene component is represented by formula (1), wherein $n$ is 2 and p is 1 or 2.

As used herein, the term "substituted" means that the referenced group possesses at least one moiety in place of one or more hydrogens in any position, the moieties selected from such groups as halogen radicals such as F, Cl, Br, hydroxyl groups, carbonyl groups, carboxyl groups, amine groups, phosphine groups, alkoxy groups, phenyl groups, naphthyl groups, $C_1$ to $C_{10}$ alkyl groups, $C_2$ to $C_{10}$ alkenyl groups, and combinations thereof. Examples of substituted alkyls and aryls includes, but are not limited to, acyl radicals, alkylamino radicals, alkoxy radicals, aryloxy radicals, alkylthio radicals, dialkylamino radicals, alkoxycarbonyl radicals, aryloxycarbonyl radicals, carbamoyl radicals, alkyl- and dialkyl-carbamoyl radicals, acyloxy radicals, acylamino radicals, arylamino radicals, and combinations thereof. More preferably, the hafnocene component useful in the present disclosure can be represented by the formula:

$$(CpR_5)_2HfX_2 \qquad (2)$$

wherein each Cp is a cyclopentadienyl ligand and each is bound to the hafnium; each R is independently selected from hydrides and $C_1$ to $C_{10}$ alkyls, most preferably hydrides and $C_1$ to $C_5$ alkyls; and X is selected from the group consisting of hydride, halide, $C_1$ to $C_{10}$ alkyls and $C_2$ to $C_{12}$ alkenyls, and more preferably X is selected from the group consisting of halides, $C_2$ to $C_6$ alkylenes and $C_1$ to $C_6$ alkyls, and most preferably X is selected from the group consisting of chloride, fluoride, $C_1$ to $C_5$ alkyls and $C_2$ to $C_6$ alkylenes. In a most preferred embodiment, the hafnocene is represented by formula (2) above, wherein at least one R group is an alkyl as defined above, preferably a $C_1$ to $C_5$ alkyl, and the others are hydrides. In a most preferred embodiment, each Cp is independently substituted with from one, two, or three groups selected from the group consisting of methyl, ethyl, propyl, butyl, and isomers thereof.

In one embodiment, the hafnocene based catalyst system is heterogeneous, i.e. the hafnocene based catalyst may further comprise a support material. The support material can be any material known in the art for supporting catalyst compositions; for example, an inorganic oxide; or in the alternative, silica, alumina, silica-alumina, magnesium chloride, graphite, magnesia, titania, zirconia, and montmorillonite, any of which can be chemically/physically modified such as by fluoriding processes, calcining or other processes known in the art. In one embodiment the support material is a silica material having an average particle size as determined by Malvern analysis of from 1 to 60 mm; or in the alternative, 10 to 40 mm.

In one embodiment, the hafnocene component may be spray-dried hafnocene composition containing a micro-particulate filler such as Cabot TS-610.

The hafnocene based catalyst system may further comprise an activator. Any suitable activator known to activate catalyst components for olefin polymerization may be suitable. In one embodiment, the activator is an alumoxane; in the alternative methalumoxane such as described by J. B. P. Soares and A. E. Hamielec in 3(2) POLYMER REACTION ENGINEERING, 131-200 (1995). The alumoxane may preferably be co-supported on the support material in a molar ratio of aluminum to hafnium (Al:Hf) ranging from 80:1 to 200:1, most preferably 90:1 to 140:1.

Such hafnium based catalyst systems are further described in details in the U.S. Patent No. 6,242,545 and U.S. Patent No. 7,078,467, incorporated herein by reference.

The tapes or monofilaments according to the present disclosure comprise the polyethylene composition, and optionally one or more other polymers. The tapes and/or monofilaments of the present disclosure may have a decitex in the range of greater than 500 g/10,000 m. All individual values and subranges from greater than 500 g/10,000 m are included herein and disclosed herein; for example, the decitex can be from a lower limit of 500, 1000, 1500, 2000, 2500 or 3000 g/10,000 m to an upper limit of 10000, 11000, 12000, 13000, 14000, 15000 or 20000 g/10,000 m. For example, the tapes or monofilaments may have a decitex in the range of 500 g/10,000 m to 20000 g/10,000 m; or in the alternative, the tapes or monofilaments may have a decitex in the range of 500 g/10,000 m to 14000 g/10,000 m; or in the alternative, the tapes or monofilaments may have a decitex in the range of 500 g/10,000 m to 14000 g/10,000 m; or in the alternative, the tapes or monofilaments may have a decitex in the range of 500 g/10,000 m to 13000 g/10,000 m; or in the alternative, the tapes or monofilaments may have a decitex in the range of 500 g/10,000 m to 12000 g/10,000 m; or in the alternative, the tapes or monofilaments may have a decitex in the range of 500 g/10,000 m to 11000 g/10,000 m; or in the alternative, the tapes or monofilaments may have a decitex in the range of 500 g/10,000 m to 10000 g/10,000 m; or in the alternative, the tapes or monofilaments may have a decitex in the range of 1000 g/10,000 m to 2000 g/10,000 m; or in the alternative, the tapes or monofilaments may have a decitex in the range of 6000 g/10,000 m to 14000 g/10,000 m; or in the alternative, the tapes or monofilaments may have a decitex in the range of greater than 1000 g/10,000 m; or in the alternative, the tapes or monofilaments may have a decitex in the range of greater than 1500 g/10,000 m; or in the alternative, the tapes or monofilaments may have a decitex in the range of greater than 2000 g/10,000 m; or in the alternative, the tapes or monofilaments may have a decitex in the range of greater than 2500 g/10,000 m; or in the alternative, the tapes or monofilaments may have a decitex in the range of greater than 3000 g/10,000 m.

The tapes or monofilaments of the present disclosure may have a tenacity in the range of 1 to 7 cN/decitex. All individual values and subranges from 1 to 7 centiNewton/decitex (cN/decitex) are included herein and disclosed herein; for example, the tenacity can be from a lower limit of 1.0, 1.4, 1.8, 2.0, 2.4, 2.8 or 3.0 cN/decitex to an upper limit of 5.0, 5.4, 5.8, 6.0, 6.2, 6.6 or 7.0 cN/decitex. For example, the tapes or monofilaments may have a tenacity in the range of 1.0 to 6.6 cN/decitex; or in the alternative, the tapes or monofilaments may have a tenacity in the range of 1.0 to 6.2 cN/decitex; or in the alternative, the tapes or monofilaments may have a tenacity in the range of 1.0 to 5.8 cN/decitex; or in the alternative, the tapes or monofilaments may have a tenacity in the range of 2.0 to 7.0 cN/decitex; or in the alternative, the tapes or monofilaments may have a tenacity in the range of 3.0 to 6.6 cN/decitex or in the alternative, the tapes or monofilaments may have a tenacity in the range of 3.0 to 6.2 cN/decitex; or in the alternative, the tapes or monofilaments may have a tenacity in the range of 3.0 to 5.8 cN/decitex; or in the alternative, the tapes or monofilaments may have a tenacity in the range of 3.6 to 7.0 cN/decitex; or in the alternative, the tapes or monofilaments may have a tenacity in the range of 3.6 to 6.6 cN/decitex or in the alternative, the tapes or monofilaments may have a tenacity in the range of 3.6 to 6.2 cN/decitex; or in the alternative, the tapes or monofilaments may have a tenacity in the range of 3.6 to 5.8 cN/decitex.

The tapes or monofilaments may have a residual elongation, measured in percent, in a range of 10 percent (%) to 100%. All individual values and subranges from 10 % to 100 % are included herein and disclosed herein; for example, the residual elongation measured in percent can be from a lower limit of 10, 11, 12, 13, 14, 15, 16, 17, 18, 19 or 20 percent to an upper limit of 80, 84, 88, 92, 96 or 100 percent. For example, the tapes or monofilaments may have an elongation in a range of 10 percent (%) to 96 %; or in the alternative, the tapes or monofilaments may have a residual elongation may have an elongation in a range of 10 percent (%) to 92 %; or in the alternative, the tapes or monofilaments may have a residual elongation may have an elongation in a range of 10 percent (%) to 80 %; or in the alternative, the tapes or monofilaments may have a residual elongation in a range of 12 percent (%) to 100 %; or in the alternative, the tapes or monofilaments may have a residual elongation in a range of 12 percent (%) to 92 %; or in the alternative, the tapes or monofilaments may have a residual elongation in a range of 15 percent (%) to 100 %; or in the alternative, the tapes or monofilaments may have a residual elongation in a range of 15 percent (%) to 92 %. Alternatively, the tapes or monofilaments may have an elongation measured in percent of greater than 10 %; or in the alternative, the tapes or monofilaments may have a residual elongation measured in percent of greater than 15 %; or in the alternative, the tapes or monofilaments may have a residual elongation measured in percent of greater than 17 %.

It is appreciated that combinations of the various characteristics of the polyethylene composition and/or the tapes or monofilaments of the present disclosure are possible. For example, the tapes or monofilaments of the present disclosure can have a variety of combination of both tenacity and residual elongation values, as provided herein. So, in one embodiment, the tapes or monofilaments of the present disclosure can have a tenacity in the range of 1 to 7 cN/decitex and residual elongation greater than 10 percent (%).; or in the alternative, the tenacity can be greater than 2 cN/decitex with and residual elongation greater than 10 percent (%); or in the alternative, the tenacity can be greater than 4 cN/decitex with and residual elongation greater than 15 percent (%); or in the alternative, the tenacity can be greater than 6 cN/decitex with and residual elongation greater than 17 percent (%), where such measurements were taken on a Zwick tensile tester on a tape/monofilament length of 260mm and an extension rate of velocity of 250mm/min until the tape/monofilament broke. Tenacity is defined as the tensile stress at break divided by the linear weight (decitex). Other combinations of characteristics and values are also possible.

The tapes or monofilaments of the present disclosure may have a hot oil shrink measured in percent after being annealed at 120 °C in the range of less than 30 percent. All individual values and subranges from less than 30 percent are included herein and disclosed herein; for example, the hot oil shrink measured in percent can be from a lower limit of 3, 4, 5 or 6 percent to an upper limit of 11, 15, 20, 25 or 30 percent. For example, the tapes or monofilaments may have a hot oil shrink measured in percent after being annealed at 120 °C in the range of less than 25 or in the alternative, the tapes or monofilaments may have a hot oil shrink measured in percent after being annealed at 120 °C in the range of less than 20; or in the alternative, the tapes or monofilaments may have a hot oil shrink measured in percent after being annealed at 120 °C in the range of less than 15; or in the alternative, the tapes or monofilaments may have a hot oil shrink measured in percent after being annealed at 120 °C in the range of 11 or less.

The tapes or monofilaments according to the present disclosure may be produced via different techniques. The term tapes as used in the context of the present disclosure means flexible, elongate elements of essentially uniform width and thickness that can have a variety of polygonal cross-sectional shapes, such as rectangular, square, triangular, among others. The term monofilaments as used in the context of the present disclosure means flexible elongate elements having a variety of circular, elliptical, semi-circular or semi-elliptical geometries. The shape, or shapes, of the monofilaments and/or tapes can be tailored for the application so as to provide the required balance of properties for the article being made with the tapes and/or monofilaments (e.g., artificial turf, as discussed herein).

With respect to the tapes of the present disclosure, these can be prepared from a film of the polyethylene composition of the present disclosure formed by a blown or a cast film process. Blown or case film process can produce films having a constant and uniform cross-sectional shape with little to no creasing.

In one embodiment, a film of the polyethylene composition can be prepared via the blown film process by forcing a melt of the polyethylene composition through an annular die. A bubble of the polyethylene composition is formed which is inflated with air and is removed at a higher speed than the die outlet speed. The bubble can be intensively cooled by a current of air so that the temperature at the frost line delimiting the molten polyethylene composition from the solidified polyethylene composition is lower than the crystallite melting point. The bubble of the polyethylene composition is then collapsed, trimmed if necessary and the resulting film can then be wound onto a roll.

In the cast film process, a thin film of the polyethylene composition can be extruded through a die (e.g., T-slot or coat hanger design) onto a chilled, highly polished turning roll, where it is quenched from one side. The speed of the roller can be used to control the draw ratio and final film thickness. The film is then sent to a second roller for cooling on the other side. Finally the resulting film can pass through a system of rollers and then wound onto a roll.

Preparing the film of the polyethylene composition of the present disclosure can also include a quenching step. In one or more embodiments, the quenching step can occur after the polyethylene composition emerges from an extruder of the blown or cast film process. In one or more embodiments, as the polyethylene composition is extruded from the extruder it can be quenched in a liquid, such as water, having a temperature of 20 to 50 °C.

In one or more embodiments, it is also possible to form the film discussed herein with two or more layers of the polyethylene composition. For example, two or more layer of the polyethylene composition can be co-extruded in the processes discussed herein, and as are known, to form the film. In one or more embodiments, the layers of the film can all be formed of the same polyethylene composition as provided herein. Alternatively, the two or more of the layers of the film can all be formed of the same polyethylene composition as provided herein, with other layers of the film being formed from a polyethylene composition, as provided herein, that is different than the two or more layer. In one or more embodiments, it is also possible to form the film discussed herein where each of the two or more layers are each formed from different polyethylene compositions, as provided herein.

The film may then be cut into tapes having the desired denier and then oriented or, vice versa, oriented and then cut into tapes. Orientation is typically achieved by stretching the film or tape, while passing it through an air oven or on a hot plate that can maintain the film or tape at a temperature below a melt temperature of the polyethylene composition. For the various embodiments, the residence time of the film and/or tape in the air oven or on the hot plate is short enough that the temperature of the film and/or tape stays below the melting temperature of the polyethylene composition. In other words, the film or tape is oriented in a non-molten state. For example, orientation can be carried out by passing the film or tape over a first and a second set of rollers arranged upstream and, respectively, downstream of an air oven/hot plate that can maintain the film or tape at a temperature below a melt temperature of the polyethylene composition. By operating the first set of rollers at a different speed than the second set of rollers (e.g., the speed of the second set of rollers being higher than the speed of the first set of rollers) the tape or film can be stretched as it passes through the air oven/hot plate.

For the various embodiments, the temperature of the air oven/hot plate maintained is below the melting temperature of the polyethylene composition. For example, the temperature of the air oven/hot plate can be from 60 °C to 150 °C. All individual values and subranges from less than 150 °C are included herein and disclosed herein; for example, the temperature of the air oven/hot plate can be maintained from a lower limit of 60, 65, 70, 75 or 80 °C to an upper limit of 95, 100, 105, 110, 115, 120, or 150 °C. For example, during stretching the tapes or monofilaments can be passed through the air oven/hot plate that is maintained at a temperature of 65 °C to 95 °C; or in the alternative, during stretching the tapes or monofilaments can be passed through the air oven/hot plate that is maintained at a temperature of 80 °C to 100 °C; or in the alternative, during stretching the tapes or monofilaments can be passed through the air oven/hot plate that is maintained at a temperature of 90 °C to 105 °C; or in the alternative, during stretching the tapes or monofilaments can be passed through the air oven/hot plate that is maintained at a temperature of 70 °C to 95 °C. It is preferred that the temperature of the air oven/hot plate maintained be as close as possible to, but smaller than the melting temperature of the polyethylene composition.

The orientation can be carried out with a predetermined draw ratio defined by the ratio of the speed of the second roller (or of the second set of rollers) to the speed of the first roller (or of the second set of rollers). The tapes or monofilaments of the present disclosure may be oriented with a draw ratio in the range of 1:3 to 1:12. All individual values and subranges from 1:3 to 1:12 are included herein and disclosed herein; for example, the draw ratio can be from a lower limit of 1:3, 1:3.5, 1:4, 1:5 or 1:6 to an upper limit of 1:7, 1:8, 1:9, 1:10, 1:11 or 1:12. For example, the tapes or monofilaments may be oriented at a draw ratio in the range of 1:3 to 1:10; or in the alternative, the tapes or monofilaments may be oriented at a draw ratio in the range of 1:4 to 1:10; or in the alternative, the tapes or monofilaments may be oriented at a draw ratio in the range of 1:5 to 1:10.

With respect to the monofilaments of the present disclosure, these can be prepared by a melt or a gel spinning process. Generally the monofilaments are prepared by extruding the polyethylene composition of the present disclosure through a die in which a plurality of holes, normally arranged along a circular pitch, is defined. As is known, the melt is prepared by extrusion and fed to the die by means of a spinning pump. The monofilaments emerging from the die are normally subsequently subjected to quenching and oriented by stretching in a manner similar to that described above with reference to the orientation of the tapes.

The present disclosure also provides a process for making a tape or monofilament of the present disclosure. In one or more embodiments, the process includes selecting the polyethylene composition according to the present disclosure and then forming the polyethylene composition into the tape or monofilament having a decitex in the range of greater than 500 g/10,000 m. In one or more embodiments, the process of making the tape and/or monofilament can include the step of orienting and cutting the tape or monofilament, as discussed herein. In one or more embodiments, the process of making the tape and/or monofilament can include the step of annealing the tape or monofilament, as discussed herein.

End use applications for the tapes or monofilaments of the present disclosure include, but are not limited to, artificial turf, sport surfaces, woven and non-woven fabrics, floor coverings, sacks, flexible intermediate bulk containers, carpets, carpet backings, rugs, upholstery, argotextiles, geotextiles, construction sheeting, ropes, twines, cordages, nets, round bale netting, wraps, bags, medical applications, strapping, reinforcements, composites, and the like. The present disclosure also relates to these articles comprising the polyethylene composition and to a process for preparing theses articles with the polyethylene composition of the present disclosure.

By way of example, embodiments of the present disclosure can be used in an artificial turf that is formed with one or more of the tapes and/or the monofilaments discussed herein. As appreciated, artificial turf has been used to replace natural grass on playing, surfaces in particular on sport fields. Polymer compositions useful for this application need to exhibit the necessary durability, tenacity, residual elongation and softness. The tapes and/or the monofilaments of the present disclosure can provide such advantageous properties for use in, among other things, artificial turf.

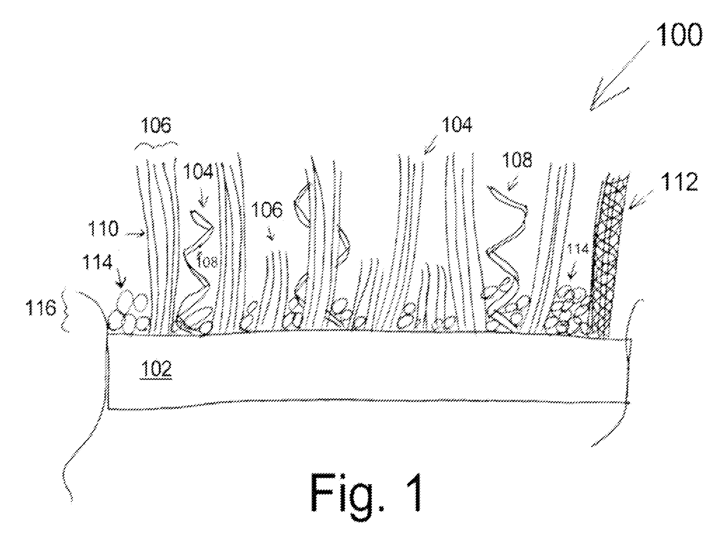

Referring now to Fig. 1, there is shown an artificial turf 100 according to one embodiment of the present disclosure. As illustrated, the artificial turf 100 includes a base material 102 and one or more of the tapes and/or monofilaments 104, provided herein, implanted into and extending from the base material 102. As illustrated, the tapes and/or monofilaments 104 can have a variety of different shapes and forms. For example, the tapes and/or monofilaments 104 can be in the form of tufts 106 (e.g., a short cluster of elongated strands of the tapes or monofilaments 104 attached at the base material 102) that are implanted into and extend from the base material 102.

In various embodiments, the tapes and/or monofilaments 104 of the artificial turf 100 can have a variety of shapes, sizes and/or stiffness. For example, the tapes and/or monofilaments 104 can have a spiral configuration 108. In another embodiment, the tapes and/or monofilaments 104 can have a relatively straight/linear configuration 110. In an additional embodiment, the tapes and/or monofilaments 104 used in the artificial turf 100 can have different lengths, heights and/or stiffness relative the other tapes and/or monofilaments 104 used in the artificial turf 100. In one embodiment, the stiffness of the tapes and/or monofilaments 104 can be altered by modifying the cross-sectional shape and/or the decitex of the tapes and/or monofilaments 104. Combinations of theses forms of the tapes and/or monofilaments 104 can be used in forming the artificial turf 100 of the present disclosure.

The artificial turf 100 of the present disclosure can also include particles 114 of an in-fill layer 116 between the tapes and/or monofilaments 104 and adjacent the base material 102. The use of more than one in-fill layer 116 with the artificial turf 100 is possible (e.g., two or more separate in-fill layers 116 of the particles 114). In one embodiment, the particles 114 of the in-fill layer 116 can be particles of rubber (natural and/or synthetic). In one embodiment, the particles 114 of the in-fill layer 116 may comprise, at least in part, the polyethylene composition as discussed herein.

In additional embodiments, the in-fill layer 116 can include particles 114 that have different degrees of resiliency, density and/or hardness, where the particles can resiliently compress at pressures that will be applied thereto when a person is walking or running on the artificial turf 100. In addition to rubber and/or the polyethylene composition of the present disclosure, the particles of the present disclosure could also be formed of another resilient material such as cork or vermiculate, among others.

In one or more embodiments, the particles 114 can have either a uniform size and/or shape. In an additional embodiment, the particles 114 can have either a non-uniform size and/or non-uniform shape. Shapes of the particles can include, but are not limited to, cylindrical, conical, spherical, parallelepiped, and elliptical, among others.

The present disclosure also provides a process for fabricating the artificial turf with the tapes and/or monofilaments of the present disclosure. In one or more embodiments, the process includes providing a base material and the tapes and/or monofilaments having a decitex in the range of greater than 500 g/10,000 m, according to the present disclosure. In one or more embodiments, the tapes and/or monofilaments can then be implanted into the base material with at least a portion of the tape and/or monofilament extending from the base material to form the artificial turf.

In one or more embodiments, yarns can be formed from continuous strands of the tapes and/or monofilaments of the polyethylene composition, where the continuous strands are twisted together to enable their conversion into a woven, knitted or braided material, such as artificial turf. The yarn formed from the tapes and/or monofilaments of the present disclosure can then be implanted into the base material with at least a portion of the yarn extending from the base material to help form the artificial turf. In one embodiment, the yarn, the tape and/or the monofilament of the present disclosure can be implanted into the base material by weaving (e.g., a face-to-face carpet weaving) techniques, as are known.

**Examples**

The following examples illustrate the present disclosure but are not intended to limit the scope of the disclosure.

In the following Examples, Comparative Example A is a commercially available high density polyethylene resin (HDPE 50250E) from the Dow Chemical Company. Examples 1 and 2 are metallocene catalyzed HDPE resins according to the present disclosure, which are formed as discussed herein.

**Examples 1 and 2**

**Catalyst Component Preparation**

The hafnocene component can be prepared by techniques known in the art. For example, HfCl$_4$ (1.00 equiv.) can be added to ether at -30 to -50 °C and stirred to give a white suspension. The suspension can then be re-cooled to -30 to -50 °C, and then lithium propylcyclopentadienide (2.00 equiv.) added in portions. The reaction will turn light brown and become thick with suspended solid on adding the lithium propylcyclopentadienide. The reaction can then be allowed to warm slowly to room temperature and stirred for 10 to 20 hours. The resultant brown mixture can then be filtered to give brown solid and a straw yellow solution. The solid can then be washed with ether as is known in the art, and the combined ether solutions concentrated to under vacuum to give a cold, white suspension. Off-white solid product is then isolated by filtration and dried under vacuum, with yields of from 70 to 95 percent.

**Catalyst Composition Preparation**

The catalyst compositions should be made at a Al/Hf mole ratio of from about 80:1 to 130:1 and the hafnium loading on the finished catalyst should be from about 0.6 to 0.8 weight percent Hf using the following general procedure. Methylaluminoxane (MAO) in toluene should be added to a clean, dry vessel and stirred at from 50 to 80 rpm and at a temperature in the range of 60 to 100 °F. Additional toluene can then be added while stirring. The hafnocene can then be dissolved in toluene and placed in the vessel with the MAO. The metallocene/MAO mixture can then be stirred at for from 30 min to 2 hours. Next, an appropriate amount of silica (average particle size in the range of 22 to 28 μm, dehydrated at 600 °C) can be added and stirred for another hour or more. The liquid can then be decanted and the catalyst composition dried at elevated temperature under flowing nitrogen while being stirred.

**Polymerization Process**

The ethylene monomers/1-hexene copolymers were produced in accordance with the following general procedure. The catalyst composition comprised a silica supported bis(n-propylcyclopentadienyl) hafnium dichloride with methalumoxane, the Al:Hf ratio being from about 80:1 to 130:1. The catalyst composition was injected dry into a fluidized bed gas phase polymerization reactor. More particularly, polymerization was conducted in a 336.5 - 419.3 mm ID diameter gas-phase fluidized bed reactor operating at approximately 2068 to 2586 kPa total pressure. The reactor bed weight was approximately 41-91 kg. Fluidizing gas was passed through the bed at a velocity of approximately 0.49 to 0.762 m per second. The fluidizing gas exiting the bed entered a resin disengaging zone located at the upper portion of the reactor. The fluidizing gas then entered a recycle loop and passed through a cycle gas compressor and water-cooled heat exchanger. The shell side water temperature was adjusted to maintain the reaction temperature to the specified value. Ethylene monomers, hydrogen, 1-hexene and nitrogen were fed to the cycle gas loop just upstream of the compressor at quantities sufficient to maintain the desired gas concentrations. Gas concentrations were measured by an on-line vapor fraction analyzer. Product (the polyethylene particles) was withdrawn from the reactor in batch mode into a purging vessel before it was transferred into a product bin. Residual catalyst and activator in the resin was deactivated in the product drum with a wet nitrogen purge. The catalyst was fed to the reactor bed through a stainless steel injection tube at a rate sufficient to maintain the desired polymer production rate. The conditions for the polymerization runs for Examples 1 and 2 are shown in Table I. Table II summarizes the molecular weight characterization of Examples 1 and 2, and Comparative Example A.

Table I

| Measurement | | Example 1 | Example 2 |
|---|---|---|---|
| Reactor Temperature | °C. | 95.0 | 85.0 |
| Isopentane % | Mole percent | 4.8 | 5.1 |
| Ethylene monomers Partial Pressure | psia | 225.0 | 225.0 |
| C6/C2 molar ratio | unitless | 0.0016 | 0.0015 |
| Hydrogen Vapor Concentration | ppm | 320 | 345 |
| Continuity Additive amount in resin | ppm(w) | 6 | 6 |
| Hf amount in resin | ppm(w) | 0.87 | 0.82 |

(continued)

| Measurement | | Example 1 | Example 2 |
|---|---|---|---|
| Al amount in resin | ppm(w) | 11.3 | 13.2 |

Table II

| | Conventional GPC | | | | Absolute GPC | | | |
|---|---|---|---|---|---|---|---|---|
| Identification | Mn | Mw | Mz | Mw/Mn | Mn | Mw | Mz(abs) | Mz/Mw |
| Example 1 | 38790 | 110980 | 231500 | 2.86 | 40780 | 116520 | 242700 | 2.08 |
| Example 2 | 35140 | 113370 | 265000 | 3.23 | 37371 | 117690 | 254700 | 2.16 |
| Comparative Example A | 24010 | 137950 | 572900 | 5.75 | 25927 | 190900 | 1320900 | 6.92 |

Table II characterizes the molecular weight distribution of Examples 1 and 2 and Comparative Example A. Examples 1 and 2 have significantly smaller ratio of Mw over Mn, as compared to Comparative Example A. The melt index and densities of Examples 1 and 2, and Comparative Example A are given in Table III.

Table III

| Resins | MI (2.16kg @ 190°C) | Density |
|---|---|---|
| | g/10min | g/cm$^3$ |
| Comparative Example A | 0.45 | 0.948 |
| Example 2 | 1.0 | 0.956 |
| Example 1 | 1.0 | 0.950 |

## Tapes of Examples 1 and 2 and Comparative Example A

Examples 1 and 2 of the polyethylene composition, and Comparative Example A were formed into a tape according to the process described below, and tested for their physical properties. The results are shown in Table IV.

Each of Examples 1 and 2, and Comparative Example A were extruded into tapes on a 30 L/D extruder with gear pump and a 500mm flat die at the parameters provided in Table IV. The film of each sample was extruded into a water bath (30mm water bath distance, 25 to 30 °C), dried and cut into 8.7mm x 0.042 tapes. These tapes were directly oriented in a hot air oven of 6m length and collected for property measurements on winders.

Linear weight (decitex) was measured by taking the weight of 50 meters of tape. Tenacity and residual elongation were measured on a Zwick tensile tester on a filament length of 260mm and an extension rate of velocity of 250mm/min until filament break. Tenacity is defined as the tensile stress at break divided by the linear weight (decitex).

The tapes of Examples 1 and 2, and Comparative Example A were tested for their hot oil shrinkage according to the following procedure. The tapes of Examples 1 and 2, and Comparative Example A first marked for length (1 meter) and then submerged for 20 seconds in hot silicon oil (90 °C), then withdrawn and remeasured. Shrinkage is measured as the percent % length reduction.

Table IV provides the extrusion, tape orientation and all other relevant processing data of the comparative evaluation. The five last rows provide physical properties of the extruded and oriented tapes of Examples 1 and 2, and Comparative Example A. All temperatures are in °C.

Table IV

| Polymer | Comparative Example A | Comparative Example A | Example 1 | Example 1 | Example 1 | Example 2 | Example 2 |
|---|---|---|---|---|---|---|---|
| P1 Ex | 83.1 | 84.5 | 81.1 | 83.8 | 83.2 | 83.7 | 82.4 |
| PS Pump | 57.2 | 57.6 | 57.5 | 59.9 | 58.2 | 58.5 | 57.8 |
| P3 Tool | 140.9 | 145.2 | 155.8 | 151.3 | 151.9 | 152.8 | 152.8 |

(continued)

| Polymer | Comparative Example A | Comparative Example A | Example 1 | Example 1 | Example 1 | Example 2 | Example 2 |
|---|---|---|---|---|---|---|---|
| Extruder rpm | 24.8 | 25.6 | 33.6 | | 13.9 | 45.1 | |
| Melt pump rmp | 5.6 | 5.8 | 5.9 | 5.5 | 5.8 | 5.7 | 5.7 |
| T Ex Z1 | 187.5 | 190.5 | 188.8 | 183.4 | 192.3 | 183.9 | 184.8 |
| T Ex Z2 | 230.6 | 230.5 | 223.4 | 235.2 | 229.8 | 224.1 | 224.4 |
| T Ex Z3 | 230.9 | 230.1 | 229.7 | 228.7 | 229.4 | 230.5 | 230 |
| T Ex Z4 | 230.1 | 230.7 | 228.1 | 230.7 | 229.9 | 230.5 | 229.7 |
| T Ex Z5 | 229.6 | 230.8 | 229.7 | 231.1 | 231.1 | 231.4 | 230.9 |
| Adapter | 229.8 | 229.7 | 229.8 | 230.1 | 229.7 | 230.1 | 229.7 |
| Filter T1 | 225.7 | 227.1 | 228.6 | 233.6 | 227.1 | 227.7 | 230.9 |
| Filter T2 | 208.6 | 211.9 | 210.1 | 212.1 | 209.7 | 208.8 | 208.9 |
| Adapter filter | 230.1 | 229.9 | 230 | 230.1 | 229.9 | 229.9 | 229.9 |
| Pump T | 237.1 | 226.9 | 229.3 | 235.2 | 235.2 | 232.4 | 230.9 |
| Adapter tool T | 240.8 | 240.5 | 240.7 | 239.2 | 239.1 | 239.1 | 239.8 |
| Tool T1 | 240 | 240 | 240 | 240 | 239.9 | 240 | 239.9 |
| Tool T2 | 240.1 | 239.9 | 240 | 240 | 240 | 240 | 239.9 |
| Tool T3 | 240.1 | 240.1 | 240.1 | 240 | 240 | 240 | 240 |
| Haul off m/min | 16.1 | 18.6 | 18.6 | 16.1 | 16.1 | 16.2 | 16.2 |
| Haul off 2 m/min | 16.5 | 19 | 19 | 16.4 | 16.4 | 16.5 | 16.5 |
| G1 m/min | 17.1 | 19.8 | 19.8 | 17.1 | 17.1 | 17.1 | 17.1 |
| G2 m/min | 120.1 | 120 | 120 | 120 | 137.1 | 120.1 | 137 |
| G3 m/min | 120 | 120 | 120 | 120 | 137 | 120 | 137 |
| Fibrillator | 0 | 0 | 0 | 0 | 0 | 0 | 0 |
| G4 m/min | 120.1 | 120 | 120 | 120 | 137 | 120 | 136.9 |
| G5 m/min | 119.9 | 120 | 120 | 120 | 137 | 120 | 137 |
| G6 m/min | 120 | 120 | 120 | 120 | 137 | 120 | 137 |
| Cooling | 32.5 | 33.3 | 31.8 | 29.5 | 32.8 | 32.8 | 34.3 |
| Oven T | 110.2 | 114.8 | 113.4 | 95.1 | 95.1 | 94.9 | 94.9 |
| Rolls 1 T | 86.5 | 87.2 | 88 | 91.2 | 90.8 | 90.1 | 90 |
| Rolls 2 T | 85.2 | 85.5 | 85.7 | 89.5 | 88.9 | 88.2 | 88.4 |
| Rolls 3 T | 90 | 90.9 | 92.7 | 98.6 | 98.1 | 96.6 | 96.6 |
| Rolls 4 T | 93.1 | 93.9 | 95 | 100.2 | 100 | 100.4 | 100.1 |
| Stretch | 7.0 | 6.1 | 6.1 | 7.0 | 8.0 | 7.0 | 8.0 |
| Decitex | 3350 | 3350 | 3500 | 3350 | 2900 | 3400 | 3000 |

(continued)

| Polymer | Comparative Example A | Comparative Example A | Example 1 | Example 1 | Example 1 | Example 2 | Example 2 |
|---|---|---|---|---|---|---|---|
| cN/decitex | 2.87 | 2.18 | 3.11 | 3.6 | 4.41 | 3.78 | 4.74 |
| elongation % | 7.3 | 8 | 35.2 | 22.9 | 15.5 | 26.1 | 17.1 |
| Shrink % | 7 | 6 | 6 | 8 | 7 | 11 | 11 |

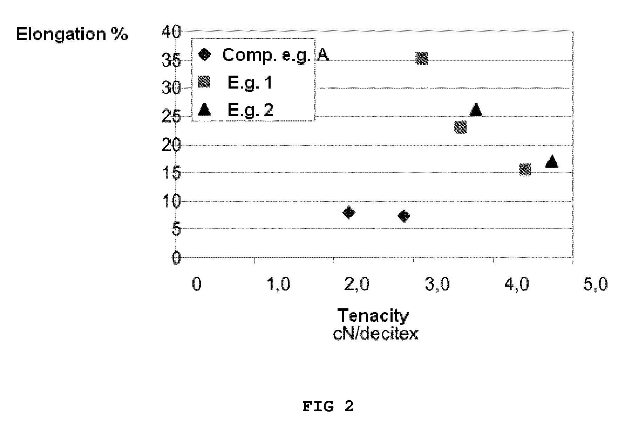

To illustrate the beneficial property combination of Examples 1 and 2, Figure 2 shows the elongation at break versus the tenacity for the tape samples of Examples 1 and 2, and Comparative Example A. As illustrated in Fig. 2, both the elongation and tenacity are significantly improved for Examples 1 and 2 as compared to Comparative Example A.

**Test Methods**

Test methods include the following:

Density (g/cm$^3$) was measured according to ASTM-D 792-03, Method B, in isopropanol. Specimens were measured within 1 hour of molding after conditioning in the isopropanol bath at 23 °C for 8 min to achieve thermal equilibrium prior to measurement. The specimens were compression molded according to ASTM D-4703-00 Annex A with a 5 min initial heating period at about 190 °C and a 15 °C/min cooling rate per Procedure C. The specimen was cooled to 45 °C in the press with continued cooling until "cool to the touch."

Melt index ($I_2$) was measured at 190 °C under a load of 2.16 kg according to ASTM D-1238-03.

Weight average molecular weight ($M_w$) and number average molecular weight ($M_n$) were determined according to methods known in the art using triple detector GPC, as described herein below.

The molecular weight distributions of the ethylene monomers polymers were determined by gel permeation chromatography (GPC). The chromatographic system consisted of a Waters (Millford, MA) 150 °C high temperature gel permeation chromatograph, equipped with a Precision Detectors (Amherst, MA) 2-angle laser light scattering detector Model 2040. The 15° angle of the light scattering detector was used for calculation purposes. Data collection was performed using Viscotek TriSEC software version 3 and a 4-channel Viscotek Data Manager DM400. The system was equipped with an on-line solvent degas device from Polymer Laboratories. The carousel compartment was operated at 140 °C and the column compartment was operated at 150 °C. The columns used were four Shodex HT 806M 300 mm, 13 $\mu$m columns and one Shodex HT803M 150 mm, 12 $\mu$m column. The solvent used was 1,2,4 trichlorobenzene. The samples were prepared at a concentration of 0.1 grams of polymer in 50 milliliters of solvent. The chromatographic solvent and the sample preparation solvent contained 200 $\mu$g/g of butylated hydroxytoluene (BHT). Both solvent sources were nitrogen sparged. Polyethylene samples were stirred gently at 160 °C for 4 hours. The injection volume used was 200 microliters, and the flow rate was 0.67 milliliters/min. Calibration of the GPC column set was performed with 21 narrow molecular weight distribution polystyrene standards, with molecular weights ranging from 580 to 8,400,000 g/mol, which were arranged in 6 "cocktail" mixtures with at least a decade of separation between individual molecular weights. The standards were purchased from Polymer Laboratories (Shropshire, UK). The polystyrene standards were prepared at 0.025 grams in 50 milliliters of solvent for molecular weights equal to, or greater than, 1,000,000 g/mol, and 0.05 grams in 50 milliliters of solvent for molecular weights less than 1,000,000 g/mol. The polystyrene standards were dissolved at 80 °C with gentle agitation for 30 minutes. The narrow standards mixtures were run first, and in order of decreasing highest molecular weight component, to minimize degradation. The polystyrene standard peak molecular weights were converted to polyethylene molecular weights using the following equation (as described in Williams and Ward, J. Polym. Sci., Polym. Let., 6, 621 (1968)):

$$M_{polyethylene} = A \times (M_{polystyrene})^B,$$

where M is the molecular weight, A has a value of 0.41 and B is equal to 1.0. The Systematic Approach for the determination of multi-detector offsets was done in a manner consistent with that published by Balke, Mourey, et al. (Mourey and Balke, Chromatography Polym. Chpt 12, (1992) and Balke, Thitiratsakul, Lew, Cheung, Mourey, Chromatography Polym. Chpt 13, (1992)), optimizing dual detector log results from Dow broad polystyrene 1683 to the narrow standard column calibration results from the narrow standards calibration curve using in-house software. The molecular weight data for off-set determination was obtained in a manner consistent with that published by Zimm (Zimm,B.H., J.Chem. Phys., 16, 1099 (1948)) and Kratochvil (Kratochvil, P., Classical Light Scattering from Polymer Solutions, Elsevier, Oxford, NY (1987)). The overall injected concentration used for the determination of the molecular weight was obtained from the sample refractive index area and the refractive index detector calibration from a linear polyethylene homopolymer of 115,000 g/mol molecular weight, which was measured in reference to NIST polyethylene homopolymer standard 1475. The chromatographic concentrations were assumed low enough to eliminate addressing $2^{nd}$ Virial coefficient effects (concentration effects on molecular weight). Molecular weight calculations were performed using in-house software. The calculation of the number-average molecular weight, weight-average molecular weight, and z-average molecular weight were made according to the following equations, assuming that the refractometer signal is directly proportional to weight fraction. The baseline-subtracted refractometer signal can be directly substituted for weight fraction in the equations below. Note that the molecular weight can be from the conventional calibration curve or the absolute molecular weight from the light scattering to refractometer ratio. An improved estimation of z-average molecular weight, the baseline-subtracted light scattering signal can be substituted for the product of weight average molecular weight and weight fraction in equation (2) below:

$$a)\quad \overline{Mn}=\frac{\sum\limits^{i} Wf_i}{\sum\limits^{i}\left(Wf_i\middle/ M_i\right)} \qquad\qquad b)\quad \overline{Mw}=\frac{\sum\limits^{i}\left(Wf_i * M_i\right)}{\sum\limits^{i} Wf_i}$$

$$c)\quad \overline{Mz}=\frac{\sum\limits^{i}\left(Wf_i * M_i^{2}\right)}{\sum\limits^{i}\left(Wf_i * M_i\right)} \qquad (2)$$

Monomodal distribution was characterized according to the weight fraction of the highest temperature peak in temperature rising elution fractionation (typically abbreviated as "TREF") data as described, for example, in Wild et al., Journal of Polymer Science, Poly. Phys. Ed., Vol. 20, p. 441 (1982), in U.S. 4,798,081 (Hazlitt et al.), or in U.S. 5,089,321 (Chum et al.), the disclosures of all of which are incorporated herein by reference. In analytical temperature rising elution fractionation analysis (as described in U.S. 4,798,081 and abbreviated herein as "ATREF"), the composition to be analyzed is dissolved in a suitable hot solvent (for example, 1,2,4 trichlorobenzene), and allowed to crystallized in a column containing an inert support (for example, stainless steel shot) by slowly reducing the temperature. The column was equipped with both an infra-red detector and a differential viscometer (DV) detector. An ATREF-DV chromatogram curve was then generated by eluting the crystallized polymer sample from the column by slowly increasing the temperature of the eluting solvent (1,2,4 trichlorobenzene). The ATREF-DV method is described in further detail in WO 99/14271, the disclosure of which is incorporated herein by reference.

Long Chain Branching was determined according to the methods known in the art, such as gel permeation chromatography coupled with low angle laser light scattering detector (GPC-LALLS) and gel permeation chromatography coupled with a differential viscometer detector (GPC-DV).

Short chain branch distribution breadth (SCBDB) was determined based in the data obtained via analytical temperature rising elution fractionation (ATREF) analysis, described herein below in further details. First, a cumulative distribution of the elution curve was calculated beginning at 30 °C and continuing to and including 109 °C. From the cumulative distribution, temperatures were selected at 5 weight percent ($T_5$) and 95 weight percent ($T_{95}$). These two temperatures were then used as the bounds for the SCBDB calculation. The SCBDB is then calculated from the following equation:

$$SCBDB = \sqrt{\frac{\sum\limits_{i} w_i\left(T_i - T_w\right)^2}{\sum\limits_{i} w_i}}$$

for all $T_i$ including and between $T_5$ and $T_{95}$. $T_i$ is the temperature at the $i$th point on the elution curve, $w_i$ is the weight

fraction of material from each temperature on the elution curve, and $T_w$ is the weight-averaged temperature of the elution curve ($\sum(w_iT_i)/\sum w_i$) between and including $T_5$ and $T_{95}$.

Analytical temperature rising elution fractionation (ATREF) analysis was conducted according to the method described in U.S. Patent No. 4,798,081 and Wilde, L.; Ryle, T.R.; Knobeloch, D.C.; Peat, I.R.; Determination of Branching Distributions in Polyethylene and Ethylene monomers Copolymers, J. Polym. Sci., 20, 441-455 (1982), which are incorporated by reference herein in their entirety. The composition to be analyzed was dissolved in trichlorobenzene and allowed to crystallize in a column containing an inert support (stainless steel shot) by slowly reducing the temperature to 20 °C at a cooling rate of 0.1 °C/min. The column was equipped with an infrared detector. An ATREF chromatogram curve was then generated by eluting the crystallized polymer sample from the column by slowly increasing the temperature of the eluting solvent (trichlorobenzene) from 20 to 120 °C at a rate of 1.5 °C/min.

Comonomer content was measured using $C_{13}$ NMR, as discussed in Randall, Rev. Macromol. Chem. Chys., C29 (2&3), pp. 285-297, and in U.S. 5,292,845, the disclosures of which are incorporated herein by reference to the extent related to such measurement. The samples were prepared by adding approximately 3g of a 50/50 mixture of tetrachloroethane-d2/orthodichlorobenzene that was 0.025M in chromium acetylacetonate (relaxation agent) to 0.4g sample in a 10mm NMR tube. The samples were dissolved and homogenized by heating the tube and its contents to 150°C. The data was collected using a JEOL Eclipse 400 MHz NMR spectrometer, corresponding to a 13C resonance frequency of 100.6 MHz. Acquisition parameters were selected to ensure quantitative 13C data acquisition in the presence of the relaxation agent. The data was acquired using gated 1H decoupling, 4000 transients per data file, a 4.7sec relaxation delay and 1.3 second acquisition time, a spectral width of 24,200 Hz and a file size of 64K data points, with the probe head heated to 130 °C. The spectra were referenced to the methylene peak at 30 ppm. The results were calculated according to ASTM method D5017-91.

Melt temperature and crystallization temperature were measured via Differential Scanning Calorimetry (DSC). All of the results reported here were generated via a TA Instruments Model Q1000 DSC equipped with an RCS (refrigerated cooling system) cooling accessory and an auto sampler. A nitrogen purge gas flow of 50 ml/min was used throughout. The sample was pressed into a thin film using a press at 175 °C and 1500 psi (10.3 MPa) maximum pressure for about 15 seconds, then air-cooled to room temperature at atmospheric pressure. About 3 to 10 mg of material was then cut into a 6 mm diameter disk using a paper hole punch, weighed to the nearest 0.001 mg, placed in a light aluminum pan (ca 50 mg) and then crimped shut. The thermal behavior of the sample was investigated with the following temperature profile: The sample was rapidly heated to 180 °C and held isothermal for 3 minutes in order to remove any previous thermal history. The sample was then cooled to -40 °C at 10 °C/min cooling rate and was held at -40 °C for 3 minutes. The sample was then heated to 150 °C at 10 °C/min heating rate. The cooling and second heating curves were recorded.

Vinyl unsaturations can be measure according to ASTM D-6248-98.

Trans unsaturations were measured according to ASTM D-6248-98.

Methyl groups were determined according to ASTM D-2238-92.

Resin stiffness was characterized by measuring the Flexural Modulus at 5 percent strain and Secant Modulii at 1 percent and 2 percent strain, and a test speed of 0.5 inch/min (13 mm/min) according to ASTM D-790-99 Method B.

Tensile testing is determined via ASTM D-638 at 2 inches per minute strain rate.

Tensile impact was determined according to ASTM D-1822-06.

The capillary viscosity measured at 190 °C. on a Goettfert Rheograph 2003 fitted with a flat entrance (180°) die of length 20 mm and diameter of 1 mm at apparent shear rates ranging from 100 to 6300 s$^{-1}$. Rabinowitsch correction was applied to account for the shear thinning effect. The corrected shear rate and shear viscosity were reported herein.

**Claims**

1. A tape, formed from a polyethylene composition having:

   at least 80 percent by weight of the polyethylene composition derived from ethylene monomers;
   0.5 to less than 20 percent by weight of the polyethylene composition derived from one or more $\alpha$-olefin monomers having no more than 20 carbon atoms;

   wherein the tape is oriented with a draw ratio of 5 to 12, is free of long chain branching, has a density in the range of 0.920 to 0.970 g/cm$^3$, a molecular weight distribution ($M_w/M_n$) in the range of 1.70 to 3.50, a melt index ($I_2$) in the range of 0.2 to 50 g/10 minutes, a molecular weight distribution ($M_z/M_w$) in the range of less than 2.5, vinyl unsaturation of less than 0.1 vinyls per one thousand carbon atoms present in the backbone of the polyethylene composition; wherein the tape has a decitex of greater than 500 g/10,000 m; and wherein the polyethylene composition comprises less than 100 parts by weight of hafnium residues remaining from a hafnium based metallocene catalyst per one million parts of polyethylene composition.

2. The tape according to Claim 1, wherein the tape has a tenacity in the range of 1 to 7 cN/decitex and residual elongation greater than 10 percent (%).

3. The tape according to Claim 1, wherein the tape has a hot oil (90 °C) shrink measured in percent after being annealed at 120 °C in the range of less than 30.

4. The tape according to Claim 1, wherein the polyethylene composition has a density in the range of 0.925 to 0.960 g/cm$^3$, and a melt index ($I_2$) in the range of 0.8 to 10 g/10 minutes.

5. The tape according to Claim 1, wherein the polyethylene composition has a vinyl unsaturation of less than 0.05 vinyls per one thousand carbon atoms present in the backbone of the polyethylene composition.

6. The tape according to Claim 1, wherein the polyethylene composition has less than 2 peaks on an elution temperature-eluted amount curve determined by continuous temperature rising elution fraction method at equal or above 30 °C, wherein the purge peak which is below 30 °C is excluded.

7. The tape according to Claim 1, wherein the polyethylene composition comprises less than 15 percent by weight of the polyethylene composition derived from one or more $\alpha$-olefin monomers.

8. The tape according to Claim 1, wherein the polyethylene composition includes less than 5 percent (%) by weight of the polyethylene composition of a UV stabilizer.

9. A process for making a tape comprising the steps of:

> selecting a polyethylene composition having;
> at least 80 percent by weight of the polyethylene composition derived from ethylene monomers;
> 0.5 to less than 20 percent by weight of the polyethylene composition derived from one or more $\alpha$-olefin monomers having no more than 20 carbon atoms;
> wherein the tape is oriented with a draw ratio of 5 to 12, is free of long chain branching, has a density in the range of 0.920 to 0.970 g/cm$^3$, a molecular weight distribution ($M_w/M_n$) in the range of 1.70 to 3.5, a melt index ($I_2$) in the range of 0.2 to 50 g/10 minutes, a molecular weight distribution ($M_z/M_w$) in the range of less than 2.5, vinyl unsaturation of less than 0.1 vinyls per one thousand carbon atoms present in the backbone of the polyethylene composition; and
> forming the polyethylene composition into the tape having a decitex of greater than 500 g/10,000 m; and
> wherein the polyethylene composition comprises less than 100 parts by weight of hafnium residues remaining from a hafnium based metallocene catalyst per one million parts of polyethylene composition.

10. The process for making a tape according to Claim 9, wherein the process further comprises the steps of extruding the polyethylene composition from an extruder, and quenching the polyethylene composition emerging from the extruder in a liquid having a temperature of 20 to 50 °C.

11. The process for making a tape according to Claim 9, wherein the process further comprises the step of orienting the tape at a temperature below a melt temperature of the polyethylene composition.

12. The process for making a tape according to Claim 11 wherein the process further comprises the step of annealing the tape.

13. The process for making a tape according to Claim 12 wherein the annealing step is carried out at 100 °C or above.

**Patentansprüche**

1. Ein Band, das aus einer Polyethylenzusammensetzung gebildet ist, wobei:

> mindestens 80 Gewichtsprozent der Polyethylenzusammensetzung von Ethylenmonomeren abgeleitet sind;
> 0,5 bis weniger als 20 Gewichtsprozent der Polyethylenzusammensetzung von einem oder mehreren $\alpha$-Olefinmonomeren mit nicht mehr als 20 Kohlenstoffatomen abgeleitet sind;

wobei das Band mit einem Ziehverhältnis von 5 bis 12 gereckt ist, frei von langkettiger Verzweigung ist, eine Dichte im Bereich von 0,920 bis 0,970 g/cm$^3$ aufweist, eine Molmassenverteilung ($M_w/M_n$) im Bereich von 1,70 bis 3,50 aufweist, einen Schmelzindex ($I_2$) im Bereich von 0,2 bis 50 g/10 Minuten aufweist, eine Molmassenverteilung ($M_z/M_w$) im Bereich von weniger als 2,5 aufweist, eine Vinyl-Ungesättigtheit von weniger als 0,1 Vinyl pro tausend Kohlenstoffatomen, vorhanden in der Hauptkette der Polyethylenzusammensetzung, aufweist; wobei das Band ein Decitex von mehr als 500 g/10 000 m aufweist; und wobei die Polyethylenzusammensetzung weniger als 100 Gewichtsteile Hafniumreste, verbleibend von einem auf Hafnium basierenden Metallocenkatalysator, pro eine Million Teile der Polyethylenzusammensetzung beinhaltet.

2. Band gemäß Anspruch 1, wobei das Band eine Zugfestigkeit im Bereich von 1 bis 7 cN/Decitex und eine Restdehnung von mehr als 10 Prozent (%) aufweist.

3. Band gemäß Anspruch 1, wobei das Band eine Schrumpfung durch heißes Öl (90 °C), gemessen in Prozent, nach dem Wärmen bei 120 °C in dem Bereich von weniger als 30 aufweist.

4. Band gemäß Anspruch 1, wobei die Polyethylenzusammensetzung eine Dichte im Bereich von 0,925 bis 0,960 g/cm$^3$ und einen Schmelzindex ($I_2$) im Bereich von 0,8 bis 10 g/10 Minuten aufweist.

5. Band gemäß Anspruch 1, wobei die Polyethylenzusammensetzung eine Vinyl-Ungesättigtheit von weniger als 0,05 Vinyl pro tausend Kohlenstoffatomen, vorhanden in der Hauptkette der Polyethylenzusammensetzung, aufweist.

6. Band gemäß Anspruch 1, wobei die Polyethylenzusammensetzung weniger als 2 Peaks auf einer Kurve von Auswaschungstemperatur und ausgewaschener Menge, bestimmt durch kontinuierliche Lösefraktionierung bei gleich oder mehr als 30 °C, aufweist, wobei der Reinigungs-Peak, der unter 30 °C liegt, ausgeschlossen ist.

7. Band gemäß Anspruch 1, wobei die Polyethylenzusammensetzung weniger als 15 Gewichtsprozent der Polyethylenzusammensetzung, die von einem oder mehreren α-Olefinmonomeren abgeleitet sind, beinhaltet.

8. Band gemäß Anspruch 1, wobei die Polyethylenzusammensetzung zu weniger als 5 Gew.-% der Polyethylenzusammensetzung einen UV-Stabilisator beinhaltet.

9. Ein Verfahren zur Herstellung eines Bandes, das die folgenden Schritte beinhaltet:

Auswählen einer Polyethylenzusammensetzung, wobei:

mindestens 80 Gewichtsprozent der Polyethylenzusammensetzung von Ethylenmonomeren abgeleitet sind; 0,5 bis weniger als 20 Gewichtsprozent der Polyethylenzusammensetzung von einem oder mehreren α-Olefinmonomeren mit nicht mehr als 20 Kohlenstoffatomen abgeleitet sind;

wobei das Band mit einem Ziehverhältnis von 5 bis 12 gereckt ist, frei von langkettiger Verzweigung ist, eine Dichte im Bereich von 0,920 bis 0,970 g/cm$^3$ aufweist, eine Molmassenverteilung ($M_w/M_n$) im Bereich von 1,70 bis 3,5 aufweist, einen Schmelzindex ($I_2$) im Bereich von 0,2 bis 50 g/10 Minuten aufweist, eine Molmassenverteilung ($M_z/M_w$) im Bereich von weniger als 2,5 aufweist, eine Vinyl-Ungesättigtheit von weniger als 0,1 Vinyl pro tausend Kohlenstoffatomen, vorhanden in der Hauptkette der Polyethylenzusammensetzung, aufweist; und Formen der Polyethylenzusammensetzung zu dem Band, das ein Decitex von mehr als 500 g/10 000 m aufweist; und wobei die Polyethylenzusammensetzung weniger als 100 Gewichtsteile Hafniumreste, verbleibend von einem auf Hafnium basierenden Metallocenkatalysator, pro eine Million Teile der Polyethylenzusammensetzung beinhaltet.

10. Verfahren zur Herstellung eines Bandes gemäß Anspruch 9, wobei das Verfahren weiterhin die Schritte des Extrudierens der Polyethylenzusammensetzung aus einem Extruder und das Abschrecken der aus dem Extruder austretenden Polyethylenzusammensetzung in einer Flüssigkeit mit einer Temperatur von 20 bis 50 °C beinhaltet.

11. Verfahren zur Herstellung eines Bandes gemäß Anspruch 9, wobei das Verfahren weiterhin den Schritt des Reckens des Bandes bei einer Temperatur unterhalb einer Schmelztemperatur der Polyethylenzusammensetzung beinhaltet.

**12.** Verfahren zur Herstellung eines Bandes gemäß Anspruch 11, wobei das Verfahren weiterhin den Schritt des Wärmens des Bandes beinhaltet.

**13.** Verfahren zur Herstellung eines Bandes gemäß Anspruch 12, wobei der Wärmeschritt bei 100 °C oder darüber durchgeführt wird.

**Revendications**

**1.** Une bande, formée à partir d'une composition de polyéthylène ayant :

au moins 80 pour cent en poids de la composition de polyéthylène dérivés de monomères d'éthylène ;
de 0,5 à moins de 20 pour cent en poids de la composition de polyéthylène dérivés d'un ou de plusieurs monomères d'$\alpha$-oléfine n'ayant pas plus de 20 atomes de carbone ;
la bande étant orientée avec un rapport d'étirage de 5 à 12, étant dépourvue de ramification en chaîne longue, ayant une masse volumique comprise dans la gamme allant de 0,920 à 0,970 g/cm$^3$, une distribution de poids moléculaire ($M_w/M_n$) comprise dans la gamme allant de 1,70 à 3,50, un indice de fluidité à chaud ($I_2$) compris dans la gamme allant de 0,2 à 50 g/10 minutes, une distribution de poids moléculaire ($M_z/M_w$) comprise dans la gamme inférieure à 2,5, une insaturation vinylique de moins de 0,1 vinyle pour mille atomes de carbone présents dans le squelette de la composition de polyéthylène ;
la bande ayant un décitex supérieur à 500 g/10 000 m ; et
dans laquelle la composition de polyéthylène comprend moins de 100 parties en poids de résidus d'hafnium restant d'un catalyseur métallocène à base d'hafnium pour un million de parties de composition de polyéthylène.

**2.** La bande selon la revendication 1, la bande ayant une ténacité comprise dans la gamme allant de 1 à 7 cN/décitex et un allongement résiduel supérieur à 10 pour cent (%).

**3.** La bande selon la revendication 1, la bande ayant un rétrécissement à l'huile chaude (90 °C) mesuré en pourcentage après avoir été recuite à 120 °C compris dans la gamme inférieure à 30.

**4.** La bande selon la revendication 1, dans laquelle la composition de polyéthylène a une masse volumique comprise dans la gamme allant de 0,925 à 0,960 g/cm$^3$, et un indice de fluidité à chaud ($I_2$) compris dans la gamme allant de 0,8 à 10 g/10 minutes.

**5.** La bande selon la revendication 1, dans laquelle la composition de polyéthylène a une insaturation vinylique inférieure à 0,05 vinyle pour mille atomes de carbone présents dans le squelette de la composition de polyéthylène.

**6.** La bande selon la revendication 1, dans laquelle la composition de polyéthylène a moins de 2 pics sur une courbe température d'élution-quantité éluée déterminée par une méthode de fraction d'élution avec élévation de température en continu à une température égale à ou au-dessus de 30 °C, dans laquelle le pic de purge qui est en dessous de 30 °C est exclus.

**7.** La bande selon la revendication 1, dans laquelle la composition de polyéthylène comprend moins de 15 pour cent en poids de la composition de polyéthylène dérivés d'un ou de plusieurs monomères $\alpha$-oléfiniques.

**8.** La bande selon la revendication 1, dans laquelle la composition de polyéthylène inclut moins de 5 pour cent (%) en poids de la composition de polyéthylène d'un stabilisant UV.

**9.** Un procédé pour réaliser une bande comprenant les étapes consistant à :

sélectionner une composition de polyéthylène ayant :

au moins 80 pour cent en poids de la composition de polyéthylène dérivés de monomères d'éthylène ;
de 0,5 à moins de 20 pour cent en poids de la composition de polyéthylène dérivés d'un ou de plusieurs monomères d'$\alpha$-oléfine n'ayant pas plus de 20 atomes de carbone ;
la bande étant orientée avec un rapport d'étirage de 5 à 12, étant dépourvue de ramification en chaîne longue, ayant une masse volumique comprise dans la gamme allant de 0,920 à 0,970 g/cm$^3$, une distribution de poids moléculaire ($M_w/M_n$) comprise dans la gamme allant de 1,70 à 3,5, un indice de fluidité à chaud

($I_2$) compris dans la gamme allant de 0,2 à 50 g/10 minutes, une distribution de poids moléculaire ($M_z/M_w$) comprise dans la gamme inférieure à 2,5, une insaturation vinylique de moins de 0,1 vinyle pour mille atomes de carbone présents dans le squelette de la composition de polyéthylène ; et

former la composition de polyéthylène en bande ayant un décitex supérieur à 500 g/10 000 m ; et

dans lequel la composition de polyéthylène comprend moins de 100 parties en poids de résidus d'hafnium restant d'un catalyseur métallocène à base d'hafnium pour un million de parties de composition de polyéthylène.

10. Le procédé pour réaliser une bande selon la revendication 9, le procédé comprenant en outre les étapes consistant à extruder la composition de polyéthylène d'un extrudeur, et refroidir la composition de polyéthylène émergeant de l'extrudeur dans un liquide ayant une température de 20 à 50 °C.

11. Le procédé pour réaliser une bande selon la revendication 9, le procédé comprenant en outre l'étape consistant à orienter la bande à une température en dessous d'une température de fusion de la composition de polyéthylène.

12. Le procédé pour réaliser une bande selon la revendication 11, le procédé comprenant en outre l'étape consistant à recuire la bande.

13. Le procédé pour réaliser une bande selon la revendication 12 dans lequel l'étape consistant à recuire est effectuée à 100 °C ou plus.

Fig. 1

EP 2 634 296 B1

FIG 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010006097 A
- JP 11269811 B
- WO 2006066777 A
- EP 1469104 A
- US 6485662 B
- US 4543399 A
- US 5405922 A
- US 5462999 A
- US 4933149 A
- US 6627713 B
- US 4621952 A
- US 6242545 B
- US 7078467 B
- US 4798081 A, Hazlitt
- US 5089321 A, Chum
- WO 9914271 A
- US 5292845 A

**Non-patent literature cited in the description**

- **WILLIAMS ; WARD.** *J. Polym. Sci., Polym. Let.,* 1968, vol. 6, 621
- **MOUREY ; BALKE.** *Chromatography Polym.,* 1992
- **BALKE ; THITIRATSAKUL ; LEW ; CHEUNG ; MOUREY.** *Chromatography Polym.,* 1992
- **ZIMM,B.H.** *J.Chem. Phys.,* 1948, vol. 16, 1099
- **KRATOCHVIL, P.** Classical Light Scattering from Polymer Solutions. Elsevier, 1987
- **WILD et al.** Journal of Polymer Science. *Poly. Phys. Ed.,* 1982, vol. 20, 441
- **WILDE, L. ; RYLE, T.R. ; KNOBELOCH, D.C. ; PEAT, I.R.** Determination of Branching Distributions in Polyethylene and Ethylene monomers Copolymers. *J. Polym. Sci.,* 1982, vol. 20, 441-455
- **RANDALL.** *Rev. Macromol. Chem. Chys.,* vol. C29 (2, 3), 285-297